(19) Europäisches Patentamt
European Patent Office
Office européen des brevets

(11) EP 4 694 096 A1

(12) **EUROPEAN PATENT APPLICATION**
published in accordance with Art. 153(4) EPC

(43) Date of publication:
**11.02.2026 Bulletin 2026/07**

(21) Application number: **24792900.3**

(22) Date of filing: **03.04.2024**

(51) International Patent Classification (IPC):
***H04L 69/324*** *(2022.01)* ***H04W 92/04*** *(2009.01)*
***H04W 88/08*** *(2009.01)* ***H04L 69/323*** *(2022.01)*
***H04L 69/00*** *(2022.01)*

(52) Cooperative Patent Classification (CPC):
**H04L 69/00; H04L 69/323; H04L 69/324; H04W 88/08; H04W 92/04**

(86) International application number:
**PCT/KR2024/004352**

(87) International publication number:
**WO 2024/219714 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.04.2023 KR 20230051488**
**25.07.2023 KR 20230097085**
**12.09.2023 KR 20230121420**

(71) Applicant: **Samsung Electronics Co., Ltd.**
**Suwon-si, Gyeonggi-do 16677 (KR)**

(72) Inventors:
- **KIM, Joonki**
**Suwon-si, Gyeonggi-do 16677 (KR)**
- **KANG, Hyoseung**
**Suwon-si, Gyeonggi-do 16677 (KR)**
- **OH, Jongho**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) DEVICE AND METHOD FOR PROCESSING UPLINK REFERENCE SIGNAL WITHIN FRONTHAUL INTERFACE

(57) This radio unit (RU) may comprise: a transceiver; a processor; and a memory including instructions. The instructions, when executed by the processor, can cause the RU to: acquire, from a distributed unit (DU), a control plane message including extension type information for demodulation reference signal (DMRS) processing; and transmit, to the DU, an uplink message including information about the DMRS. The DMRS can be identified on the basis of the extension type information for DMRS processing. The extension type information can include DMRS waveform information, DMRS mapping type information, DMRS configuration type information, DMRS antenna port information, DMRS additional position information, DMRS frequency division multiplexing (FDM) information, and DMRS scrambling identification information.

EP 4 694 096 A1

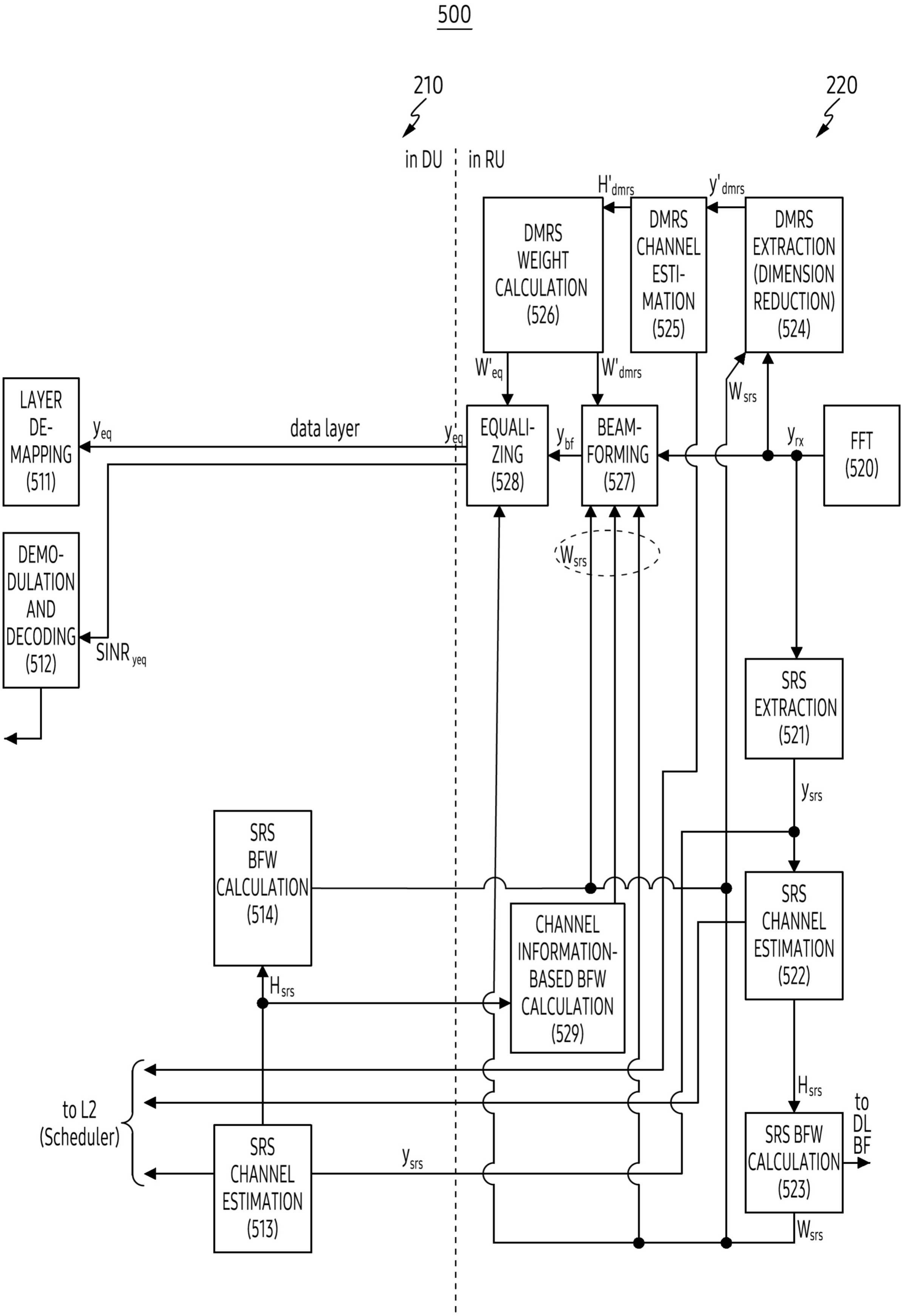
500
210
220
in DU
in RU
DMRS WEIGHT CALCULATION (526)
H'dmrs
DMRS CHANNEL ESTI-MATION (525)
y'dmrs
DMRS EXTRACTION (DIMENSION REDUCTION) (524)
W'eq
W'dmrs
Wsrs
LAYER DE-MAPPING (511)
yeq
data layer
y'eq
EQUALI-ZING (528)
ybf
BEAM-FORMING (527)
yrx
FFT (520)
Wsrs
DEMO-DULATION AND DECODING (512)
SINRyeq
SRS EXTRACTION (521)
ysrs
SRS BFW CALCULATION (514)
CHANNEL INFORMATION-BASED BFW CALCULATION (529)
SRS CHANNEL ESTIMATION (522)
Hsrs
Hsrs
to L2 (Scheduler)
SRS CHANNEL ESTIMATION (513)
ysrs
SRS BFW CALCULATION (523)
to DL BF
Wsrs

FIG. 5A

## Description

### [Technical Field]

The present disclosure relates to a device and a method for processing an uplink reference signal within a fronthaul interface.

### [Background Art]

As a transmission capacity increases in a wireless communication system, a functional split that functionally splits a base station is being applied. According to the functional split, the base station may be split into a distributed unit (DU) and a radio unit (RU). A fronthaul interface is defined for communication between the DU and the RU.

### [Disclosure]

### [Technical Solution]

In embodiments, a radio unit (RU) may comprise a transceiver. The RU may comprise a processor. The RU may comprise memory comprising instructions. The instructions, when executed by the processor, may cause the RU to obtain, from a distributed unit (DU), a control plane message including extension type information for demodulation reference signal (DMRS) processing. The instructions, when executed by the processor, may cause the RU to transmit, to the DU, an uplink message including information on DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

In embodiments, a distributed unit (DU) may comprise a transceiver. The DU may comprise a processor. The DU may comprise memory comprising instructions. The instructions, when executed by the processor, may cause the DU to transmit, to a radio unit (RU), a control plane message including extension type information for demodulation reference signal (DMRS) processing. The instructions, when executed by the processor, may cause the DU to obtain, from the RU, an uplink message including information on DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

In embodiments, a method performed by a radio unit (RU) may comprise obtaining, from a distributed unit (DU), a control plane message including extension type information for demodulation reference signal (DMRS) processing. The method may comprise transmitting, to the DU, an uplink message including information on DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

In embodiments, a non-transitory computer readable storage media may comprise instructions that, when executed by a processor of a radio unit (RU) comprising a transceiver, cause the RU to obtain, from a distributed unit (DU), a control plane message including extension type information for demodulation reference signal (DMRS) processing. The non-transitory computer readable storage media may comprise instructions that, when executed by the processor, cause the RU to transmit, to the DU, an uplink message including information on a processed DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

In embodiments, a radio unit (RU) may comprise a transceiver. The RU may comprise a processor. The RU may comprise memory comprising instructions. The instructions, when executed by the processor, may cause the RU to obtain, from a distributed unit (DU), a control plane message including extension type information for demodulation reference signal (DMRS) processing. The instructions, when executed by the processor, may cause the RU to transmit, to the DU, an uplink message including information on DMRS. The DMRS may be identified based on the extension type information for DMRS processing. The extension type information may include orthogonal cover code (OCC) information of DMRS, a cyclic shift of DMRS, the number of layers of DMRS, a group number of DMRS, a sequence number of DMRS, frequency density information of DMRS, a phase shift of DMRS, and a base sequence of DMRS.

In embodiments, a distributed unit (DU) may comprise a transceiver. The DU may comprise a processor. The DU may comprise memory comprising instructions. The instructions, when executed by the processor, may cause the DU to transmit, to a radio unit (RU), a control plane message including extension type information for demodulation reference signal (DMRS) processing. The instructions, when executed by the processor, may cause the DU to obtain, from the RU, an uplink message including information on DMRS. The DMRS may be identified based on the extension type information for DMRS processing. The extension type information may include orthogonal cover code (OCC) information of DMRS, a cyclic shift of DMRS, the number of layers of DMRS, a group number of DMRS, a sequence number of DMRS, frequency density information of DMRS, a phase shift of DMRS, and a base sequence of DMRS.

**[Description of the Drawings]**

FIG. 1 illustrates an example of a wireless communication system.

FIG. 2A illustrates an example of a front haul interface.

FIG. 2B illustrates an example of a front haul interface of an open-radio access network (O-RAN).

FIG. 3A illustrates an example of a functional configuration of a distributed unit (DU).

FIG. 3B illustrates an example of a functional configuration of a radio unit (RU).

FIG. 4 illustrates an example of a function split between DU and RU.

FIG. 5A illustrates an example of a method of processing a demodulation reference signal (DMRS) by RU in a class A.

FIG. 5B illustrates an example of a method of processing DMRS by RU in a class B.

FIG. 6A illustrates an example of an extension type for DMRS processing.

FIG. 6B illustrates an example of an extension type for DMRS processing including user equipment (UE) information.

FIGS. 7A and 7B illustrate an example of an extension type for DMRS processing.

FIG. 7C illustrates an example of an extension type for DMRS processing including user equipment (UE) information.

FIGS. 8A to 8C illustrate an example of an extension type for port reduction.

FIG. 9A illustrates an example of an extension type for setting up a class.

FIG. 9B illustrates an example of a section type for setting up a class.

FIG. 10 illustrates an example of an extension type for providing frequency offset (FO) feedback information.

FIG. 11A illustrates an example of a user plane message including reporting information.

FIG. 11B illustrates an example of a control plane message including reporting information.

FIG. 12 illustrates an example of a signal flow for transmitting an uplink message.

FIG. 13 illustrates an example of an operation flow for a method of reporting information on DMRS based on extension type information for DMRS processing.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., packet, message, signal, information, or signaling), a term referring to a resource (e.g., section, symbol, slot, subframe, radio frame, subcarrier, resource element (RE), resource block (RB), bandwidth part (BWP), or occasion), a term for a calculation state (e.g., step, operation, or procedure), a term referring to data (e.g., packet, message, user stream, information, bit, symbol, or codeword), a term referring to a channel, a term referring to a network entity (e.g., distributed unit (DU), radio unit (RU), central unit (CU), CU control plane (CU-CP), CU user plane (CU-UP), open radio access network (O-RAN) DU (O-DU), O-RAN RU (O-RU), O-RAN CU (O-CU), O-RAN CU-CP (O-CU-CP), or O-RAN CU-UP (O-CU-UP)), and a term referring to a component of a device, and the like, that are used in the following description, are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes embodiments by using terms used in some communication standards (e.g., 3rd Generation Partnership Project (3GPP)), but this is only an example for explanation. Embodiments of the present disclosure may be applied to other communication and broadcasting systems.

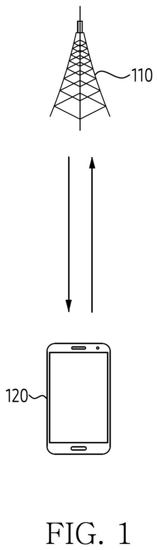

FIG. 1 illustrates an example of a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

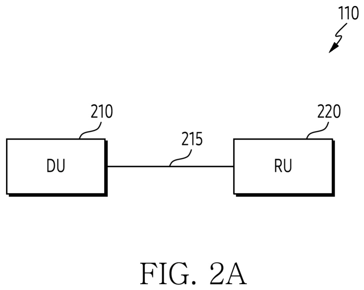

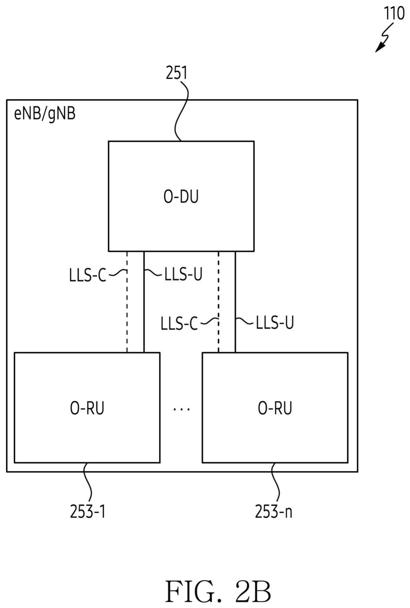

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a section between entities between a radio access network (RAN) and a base station.

FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the digital unit (DU) 210 may be implemented by being separated into a centralized unit (CU) and a distributed unit (DU). Between a core (e.g., 5G core (5GC) or next generation core (NGC)) network and a radio access network (RAN), the base station may be implemented in a structure in which a centralized unit (CU), a distributed unit (DU), and a radio unit (RU) are arranged in order. An interface between the centralized unit (CU) and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates an example of a fronthaul interface of an open-radio access network (O-RAN) according to embodiments. As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

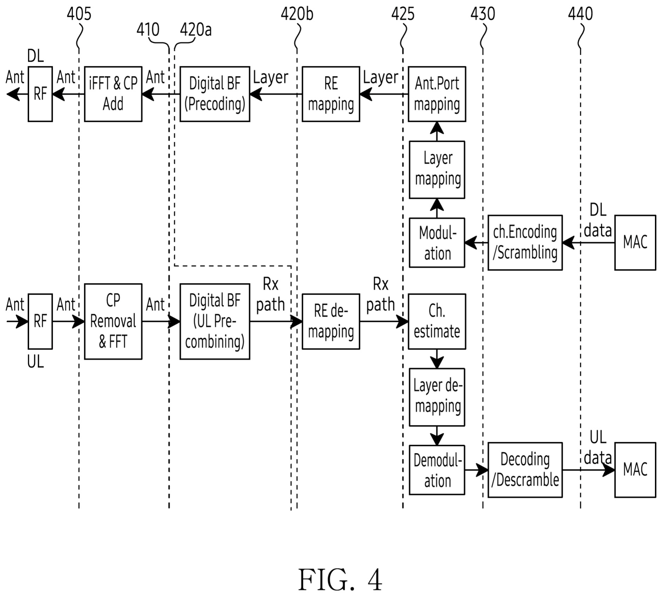

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described later, operations of the DU 210 may also be performed by the O-DU 251. A description of the DU 210 may be applied to the O-DU 251. Likewise, in embodiments described later, operations of the RU 220 may also be performed by the O-RU 253-1. A description of the RU 220 may be applied to the O-RU 253-1.

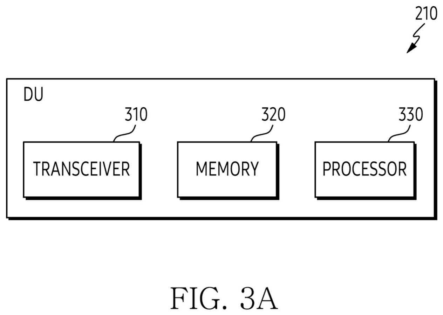

FIG. 3A illustrates an example of a functional configuration of a distributed unit (DU).

A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

For example, the processor 330 may include various processing circuits and/or a plurality of processors. For example, the term "processor" used in the present document, including the scope of claims, may include various processing circuits including at least one processor, and one or more of the at least one processor may be configured to perform various functions described below individually and/or collectively in a distributed manner. As used below, in a case that "processor", "at least one processor", and "one or more processors" are described as configured to perform various functions, these terms are not limited to, for example, situations in which one processor performs a portion of cited functions, and situations in which another processor(s) performs another portion of the cited functions, and also situations in which one processor is capable of performing all of the cited functions. Additionally, the at least one processor may include, for example, a combination of processors that perform various functions listed/disclosed in a distributed manner. The at least one processor may execute program instructions to achieve or perform various functions.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

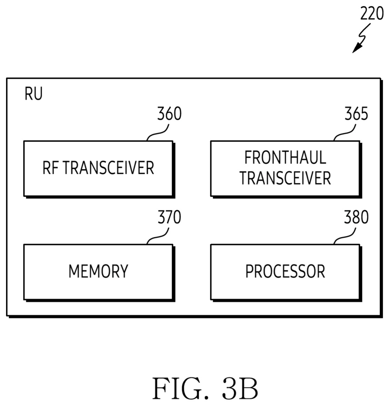

FIG. 3B illustrates an axample of a functional configuration of a radio unit (RU).

A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

For example, the processor 380 may include various processing circuits and/or a plurality of processors. For example, the term "processor" used in the present document, including the scope of claims, may include various processing circuits including at least one processor, and one or more of the at least one processor may be configured to perform various functions described below individually and/or collectively in a distributed manner. As used below, in a case that "processor", "at least one processor", and "one or more processors" are described as configured to perform various functions, these terms are not limited to, for example, situations in which one processor performs a portion of cited functions, and situations in which another processor(s) performs another portion of the cited functions, and also situations in which one processor is capable of performing all of the cited functions. Additionally, the at least one processor may include, for example, a combination of processors that perform various functions listed/disclosed in a distributed manner. The at least one processor may execute program instructions to achieve or perform various functions.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG.

2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.

1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

Open Radio Access Network (ORAN) is an organization that regulates a standard of a fronthaul interface between DU and RU according to various functional split structures and provides a standard interface in a split structure (e.g., 7-2x functional split structure) applying Ethernet.

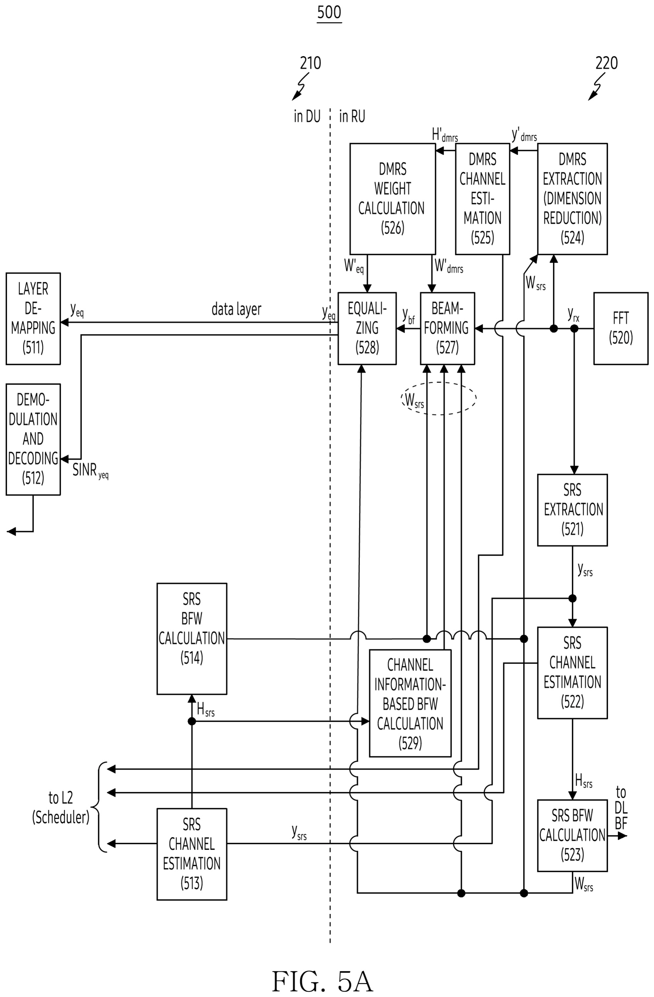

FIG. 5A illustrates an example of a method in which RU processes a demodulation reference signal (DMRS) in a class A.

FIG. 5A illustrates an example 500 of a method in which RU 220 processes DMRS in the class A and provides processed information to DU 210. For example, the class A may represent an example of functional split in which DMRS processing is performed in the RU 220. The class A may be referred to as an uplink performance improvement (ULPI) class A (ULPI class A) or DMRS beamforming-equalizing (DMRS BF-EQ). For example, the DMRS processing may include extraction, channel estimation, and weight calculation for uplink DMRS.

Referring to the example 500, in a case of using the class A, the RU 220 may perform fast Fourier transform (FFT) 520, sounding reference signal extraction 521, SRS channel estimation 522, SRS beamforming weight (BFW) calculation 523, DMRS extraction 524, DMRS channel estimation 525, DMRS weight calculation 526, beamforming 527, equalizing 528, and channel information-based BFW calculation 529. In the example 500, it is illustrated as an operation (or a function), such as the FFT 520, the SRS extraction 521, the SRS channel estimation 522, the SRS BFW calculation 523, the DMRS extraction 524, the DMRS channel estimation 525, the DMRS weight calculation 526, the beamforming 527, the equalizing 528, and the channel information-based BFW calculation 529, but the RU 220 may be implemented based on hardware, software, or a combination of hardware and software to perform the operation.

Referring to the example 500, the RU 220 may perform the FFT 520 on an uplink signal received through an uplink channel. For example, the RU 220 may perform the FFT 520 on the uplink signal received from a terminal 120. The RU 220 may obtain a signal $y_{rx}$ associated with antenna elements based on the FFT 520. For example, the uplink channel may include a physical uplink shared channel (PUSCH). For example, the uplink signal may include SRS or DMRS.

For example, the RU 220 may perform the SRS extraction 521 on the signal $y_{rx}$. For example, the RU 220 may perform the SRS channel estimation 522 on SRS $y_{SRS}$ extracted through the SRS extraction 521. The RU 220 may obtain a channel estimation matrix $H_{SRS}$ based on the SRS channel estimation 522. The RU 220 may perform the SRS BFW calculation 523 based on the channel estimation matrix $H_{SRS}$. Based on the SRS BFW calculation 523, the RU 220 may obtain a matrix $W_{SRS}$ (NxK) representing a concatenation of beamforming weight vectors (e.g., N). The K may represent the number of the antenna elements of the RU 220.

For example, the RU 220 may perform the DMRS extraction 524 based on the signal $y_{rx}$ and the matrix $W_{SRS}$. For example, the RU 220 may obtain DMRS $y'_{dmrs}$ extracted based on the DMRS extraction 524. While performing the DMRS extraction 524, the RU 220 may also perform dimension reduction. For example, the dimension reduction may be referred to as port reduction, pre reduction, and pre dimension reduction. Based on the dimension reduction, an order (or a value) (e.g., K) of a dimension corresponding to the antenna elements of the RU 220 may be reduced. For example, the RU 220 may perform the DMRS channel estimation 525 based on the extracted DMRS $y'_{dmrs}$. The RU 220 may obtain a channel estimation matrix $H_{dmrs}$ based on the DMRS channel estimation 525. The RU 220 may perform the DMRS weight calculation 526 based on the channel estimation matrix $H_{dmrs}$. Based on the DMRS weight calculation 526, the RU 220 may obtain a matrix $W'_{dmrs}$ (LxK) representing a concatenation of beamforming weight vectors L and a matrix $W'_{eq}$ (LxL) representing a normalization weight matrix of IQ data in each layer.

For example, the RU 220 may perform the beamforming 527. For example, the RU 220 may perform the beamforming 527 on the signal $y_{rx}$ based on the matrix $W_{SRS}$ and the matrix $W'_{dmrs}$ (LxK). The RU 220 may obtain a beamformed signal $y_{bf}$ based on the beamforming 527. In this case, the matrix $W_{SRS}$ may be obtained based on the SRS BFW calculation 523, SRS BFW calculation 514, or the channel information-based BFW calculation 529. For example, the channel information-based BFW calculation 529 may be performed by the RU 220. For example, the SRS BFW calculation 514 may be performed by the DU 210. For example, the RU 220 may perform the equalizing 528 on the signal $y_{bf}$ based on the matrix $W'_{eq}$. The RU 220 may acquire a signal $y_{eq}$ based on the equalizing 528. For example, the RU 22 may provide (or transmit) the signal $y_{eq}$ to the DU 210. The signal $y_{eq}$ may be referred to as an uplink message. For example, the uplink message may include information on a calculated SINR $SINR_{yeq}$.

Referring to the example 500, in a case of using the class A, the DU 210 may perform layer demapping 511, demodulation and decoding 512, SRS channel estimation 513, and the SRS BFW calculation 514. In the example 500, it is illustrated as an operation (or a function), such as the layer demapping 511, the demodulation and decoding 512, the SRS channel estimation 513, and the SRS BFW calculation 514, but the DU 210 may be implemented based on hardware, software, or a combination of hardware and software to perform the operation.

Referring to the example 500, the DU 210 may perform the layer demapping 511 based on the signal $y_{eq}$ received (or obtained) from the RU 220. The DU 210 may the demodulation and decoding 512 based on a result of the layer demapping 511 and the SINR $SINR_{yeq}$. In addition, the DU 210 may perform the SRS channel estimation 513 based on the extracted SRS $y_{SRS}$. The DU 210 may obtain the channel estimation matrix $H_{SRS}$ based on the SRS channel estimation 513. Thereafter, the DU 210 may perform scheduling through a scheduler.

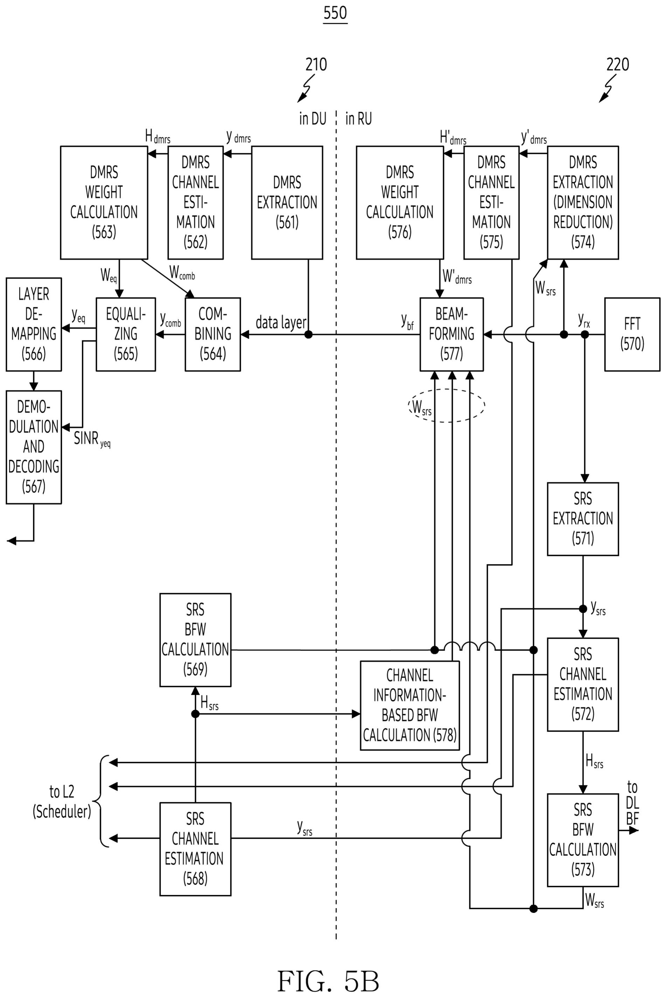

FIG. 5B illustrates an example of a method in which RU processes DMRS in a class B.

FIG. 5B illustrates an example 550 of a method of providing information in which DMRS processing is performed in RU 220 and DU 210 in the class B. For example, the class B may represent an example of functional split in which the DMRS processing is performed in the RU 220 and the DU 210. The class B may be referred to as an uplink performance improvement (ULPI) class B (ULPI class B) or DMRS beamforming-nonequalizing (DMRS BF-NEQ). For example, the DMRS processing may include extraction, channel estimation, and weight calculation for uplink DMRS.

Referring to the example 550, in a case of using the class B, the RU 220 may perform fast Fourier transform (FFT) 570, sounding reference signal (SRS) extraction 571, SRS channel estimation 572, SRS beamforming weight (BFW) calculation 573, DMRS extraction 574, DMRS channel estimation 575, DMRS weight calculation 576, beamforming 577, and channel information-based BFW calculation 578. In the example 500, it is illustrated as an operation (or a function), such as the FFT 570, the SRS extraction 571, the SRS channel estimation 572, the SRS BFW calculation 573, the DMRS extraction 574, the DMRS channel estimation 575, the DMRS weight calculation 576, the beamforming 577, and the channel information-based BFW calculation 578, but the RU 220 may be implemented based on hardware, software, or a combination of hardware and software to perform the operation.

Referring to the example 550, the RU 220 may perform the FFT 570 on an uplink signal received through an uplink channel. For example, the RU 220 may perform the FFT 570 on the uplink signal received from a terminal 120. The RU 220 may obtain a signal $y_{rx}$ associated with antenna elements based on the FFT 570. For example, the uplink channel may include a physical uplink shared channel (PUSCH). For example, the uplink signal may include SRS or DMRS.

For example, the RU 220 may perform the SRS extraction 571 on the signal $y_{rx}$. For example, the RU 220 may perform the SRS channel estimation 572 on SRS $y_{SRS}$ extracted through the SRS extraction 571. The RU 220 may obtain a channel estimation matrix $H_{SRS}$ based on the SRS channel estimation 572. The RU 220 may perform the SRS BFW calculation 573 based on the channel estimation matrix $H_{SRS}$. Based on the SRS BFW calculation 573, the RU 220 may obtain a matrix $W_{SRS}$ (NxK) representing a concatenation of beamforming weight vectors (e.g., N). The K may represent the number of the antenna elements of the RU 220.

For example, the RU 220 may perform the DMRS extraction 574 based on the signal $y_{rx}$ and the matrix $W_{SRS}$. For example, the RU 220 may obtain DMRS $y'_{dmrs}$ extracted based on the DMRS extraction 574. While performing the DMRS extraction 574, the RU 220 may also perform dimension reduction. For example, the dimension reduction may be referred to as port reduction, pre reduction, and pre dimension reduction. Based on the dimension reduction, an order (or a value) (e.g., K) of a dimension corresponding to the antenna elements of the RU 220 may be reduced. For example, the RU 220 may perform the DMRS channel estimation 575 based on the extracted DMRS $y'_{dmrs}$. The RU 220 may obtain a channel estimation matrix $H_{dmrs}$ based on the DMRS channel estimation 575. The RU 220 may perform the DMRS weight calculation 576 based on the channel estimation matrix $H_{dmrs}$. Based on the DMRS weight calculation 576, the RU 220 may obtain a matrix $W'_{dmrs}$ (LxK) representing a concatenation of beamforming weight vectors L.

For example, the RU 220 may perform the beamforming 577. For example, the RU 220 may perform the beamforming 577 on the signal $y_{rx}$ based on the matrix $W_{SRS}$ and the matrix $W'_{dmrs}$ (LxK). The RU 220 may obtain a beamformed signal $y_{bf}$ based on the beamforming 577. In this case, the matrix $W_{SRS}$ may be obtained based on the SRS BFW calculation 573, SRS BFW calculation 569, or channel information-based BFW calculation 579. For example, the channel information-based BFW calculation 579 may be performed by the RU 220. For example, the SRS BFW calculation 569 may be performed by the DU 210. For example, the RU 220 may provide (or transmit) the signal $y_{bf}$ to the DU 210. The signal $y_{bf}$ may be referred to as an uplink message. For example, the uplink message may include information on a calculated SINR $SINR_{yeq}$.

Referring to the example 550, in a case of using the class B, the DU 210 may perform DMRS extraction 561, DMRS channel estimation 562, DMRS weight calculation 563, combining 564, equalizing 565, layer demapping 566, demodulation and decoding 567, SRS channel estimation 568, and the SRS BFW calculation 569. In the example 550, it is illustrated as an operation (or a function), such as the DMRS extraction 561, the DMRS channel estimation 562, the DMRS weight calculation 563, the combining 564, the equalizing 565, the layer demapping 566, the demodulation and decoding 567, the SRS channel estimation 568, and the SRS BFW calculation 569, but the DU 210 may be implemented based on hardware, software, or a combination of hardware and software to perform the operation.

For example, the DU 210 may perform the DMRS extraction 561 based on the signal $y_{bf}$. For example, the DU 210 may obtain DMRS $y_{dmrs}$ extracted based on the DMRS extraction 561. For example, the DU 210 may perform the DMRS channel estimation 562 based on the extracted DMRS $y_{dmrs}$. The DU 210 may obtain the channel estimation matrix $H_{dmrs}$

based on the DMRS channel estimation 562. The DU 210 may perform the DMRS weight calculation 563 based on the channel estimation matrix $H_{dmrs}$. The DU 210 may obtain a matrix $W_{eq}$ (LxL) representing a normalization weight matrix of IQ data and a matrix $W'_{comb}$ (Lx(M+N) in which spatial streams (M+N) are mapped to layers L, based on the DMRS weight calculation 563. For example, the DU 210 may perform the combining 564 on the signal $y_{bf}$ based on the matrix $W'_{comb}$. The DU 210 may obtain a signal $y_{comb}$ of layer streams M that are not equalized based on the combining 564. For example, the DU 210 may perform the equalizing 565 on the signal $y_{comb}$ based on the matrix $W_{eq}$. The DU 210 may obtain a signal $y_{eq}$ and the SINR $SINR_{yeq}$ based on the equalizing 565. For example, the DU 210 may perform the layer demapping 566 based on the signal $y_{eq}$. The DU 210 may perform the demodulation and decoding 567 based on a result of the layer demapping 566 and the SINR $SINR_{yeq}$. In addition, the DU 210 may perform the SRS channel estimation 568 based on the extracted SRS $y_{SRS}$. The DU 210 may obtain the channel estimation matrix $H_{SRS}$ based on the SRS channel estimation 568. Thereafter, the DU 210 may perform scheduling through a scheduler.

Referring to FIGS. 5A and 5B, in an uplink signal processing process according to the class A and the class B, the RU 220 may perform DMRS processing. The class A and the class B may be defined for each category of the RU 220. For example, the class A and the class B may be defined for a category A (or Cat A) RU 220. In addition, for example, the class A and the class B may be defined for a category B (or Cat B) RU 220. For example, the RU 220 may need information for the DMRS processing. Hereinafter, examples of the information for the DMRS processing in which the DU 210 provides, to the RU 220 will be described. Based on the information for the DMRS processing as described below, the RU 220 may effectively perform the DMRS processing. In addition, from a perspective of a system (or a base station) including the DU 210 and the RU 220, the RU 220 may perform at least a portion of operations to be processed by the DU 210, thereby improving uplink performance including a processing speed for an uplink signal.

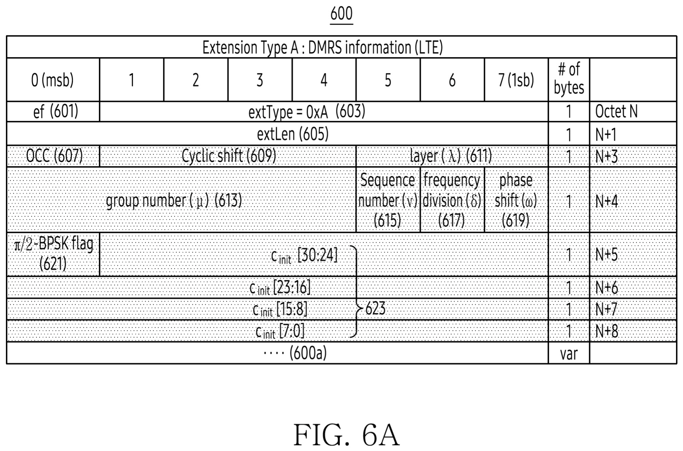

FIG. 6A illustrates an example of an extension type for DMRS processing.

In FIG. 6A, an example of an extension type 600 for the DMRS processing is illustrated. For example, the DMRS processing may represent processing for uplink DMRS (hereinafter referred to as DMRS). For example, DU 210 may transmit (or provide) a control plane message including information on the extension type 600 to RU 220. Accordingly, the RU 220 may perform the DMRS processing based on the control plane message (or the extension type 600). For example, the RU 220 may receive an uplink signal from a terminal 120. For example, the RU 220 may perform the DMRS processing based on the control plane message (or the extension type 600). For example, the RU 220 may be associated with a class A or a class B.

Referring to FIG. 6A, the extension type 600 for the DMRS processing may include information required to perform the DMRS processing. The extension type 600 may be referred to as extension type information or section extension (SE). For example, the extension type 600 may be used in long term evolution (LTE). For example, the DMRS processed based on the extension type 600 may be DMRS processed through an LTE communication technique.

According to an embodiment, the extension type 600 may include a common parameter. For example, the common parameter may include an extension flag (ef) 601, an extension type (extType) 603, and an extension length (extLen) 605.

For example, the ef 601 may be used to indicate whether there is another extension type following the extension type 600. For example, the ef 601 may have a field length of 1 bit. For example, in a case that a value of the ef 601 is 1, the other extension type may exist. Alternatively, in a case that the value of the ef 601 is 0, the other extension type may not exist. The ef 601 may be referred to as an extension flag.

For example, the extType 603 may be used to indicate the extension type 600. For example, the extType 603 may provide an extension type that provides specific additional parameters to a subject data extension. For example, the extType 603 may have a field length of 7 bits. For example, the extType 603 may have different values for each extension type. For example, the extType 603 of the extension type 600 for the DMRS processing may include 0×A. The A may represent an arbitrary order or number. The A may represent a number of two or more digits (e.g., 25). The extension type 600 in which the extension type 603 is the A may be referred to as an extension type A. The extType 603 may be referred to as an index of extension type information.

For example, the extLen 605 may provide a length of the extension type 600. For example, the extLen 605 may provide the length of the extension type 600 in units of 32 bits (or 4 bytes) words. For example, the extLen 605 may have a field length of 8 bits. However, an embodiment of the present disclosure is not limited thereto. For example, according to information included in the extension type 600, the extLen 605 may have a field length of 16 bits or more. The extLen 605 may be referred to as a length of the extension type information. For example, the extension type 600 may have a length of 8 bytes indicated by the extLen 605.

According to an embodiment, the extension type 600 may include parameters for the DMRS processing. For example, the parameters for the DMRS processing may include orthogonal cover code (OCC) information 607 of DMRS, cyclic shift information 609 for the DMRS, layer information 611 for the DMRS, a group number 613 for the DMRS, a sequence number 615 for the DMRS, frequency density information of the DMRS, phase shift information of the DMRS, a $\pi/2$ BPSK flag 621 for the DMRS, and base sequence information 623 for the DMRS.

For example, the orthogonal cover code (OCC) information 607 of the DMRS may indicate information indicating OCC of the DMRS. For example, the OCC may represent a coding method for securing orthogonality of the DMRS. For example, the OCC information 607 may have a field length of 1 bit. For example, in a case that the OCC information 607 is 0, the OCC may be [1, 1]. Alternatively, for example, in a case that the OCC information 609 is 1, the OCC may be [1, -1].

For example, the cyclic shift information 609 for the DMRS may indicate a cyclic shift $n_{CS}$ of the DMRS. For example, the cyclic shift $n_{CS}$ may represent information for generating the DMRS. For example, the cyclic shift information 609 may have a field length of 4 bits. For example, the cyclic shift $n_{CS}$ may have a value of 0 to 11.

For example, the layer information 611 for the DMRS may indicate a layer $\lambda$ associated with transmission of the DMRS. For example, the layer information 611 may have a field length of 3 bits. For example, the layer $\lambda$ may have an index 0 to 7.

For example, the group number 613 of the DMRS may indicate a group including a sequence for generating the DMRS. For example, the group number 613 $\mu$ may have a field length of 5 bits. For example, the group number 613$\mu$ may be a value of 0 to 29. In other words, the number of groups for the sequence for generating the DMRS may be 30. However, the embodiment of the present disclosure is not limited thereto.

For example, the sequence number 615 for the DMRS may be used to indicate one of two sequences in the group. For example, the sequence number 615 v may represent a length of 1 bit. For example, in a case that the sequence number 615 v is 0, a first sequence of the two sequences may be indicated. Alternatively, for example, in a case that the sequence number 615 v is 1, a second sequence of the two sequences may be indicated.

For example, the frequency density information 617 of the DMRS may indicate a frequency division $\delta$ of the DMRS. For example, the frequency density information 617 may have a field length of 1 bit. For example, in a case that the frequency density information 617 is 0, the frequency division $\delta$ may not be performed. In other words, the DMRS may be mapped to 12 REs in one radio resource block (RB). Alternatively, for example, in a case that the frequency density information 617 is 0, the frequency division $\delta$ may be performed. In other words, the DMRS may be mapped to 6 REs among the 12 REs in the one radio resource block (RB).

For example, the phase shift information 619 of the DMRS may be used to indicate a phase shift $\omega$ of the DMRS. For example, the phase shift information 619 may have a field length of 1 bit. For example, in a case that the phase shift information 619 is 0, the phase shift $\omega$ may indicate a case when the phase shift information 619 is 'disable'. Alternatively, for example, in a case that the phase shift information 619 is 1, the phase shift $\omega$ may indicate a case when the phase shift information is 'enable'.

For example, the $\pi$/2 BPSK flag 621 for the DMRS may indicate whether a modulation and coding scheme (MCS) for generating the DMRS is $\pi$/2 BPSK. For example, the $\pi$/2 BPSK flag 621 may have a field length of 1 bit. For example, in a case that the $\pi$/2 BPSK flag 621 is 0, the MCS for the DMRS may be MCS different from the $\pi$/2 BPSK. For example, in a case that the $\pi$/2 BPSK flag 621 is 1, the MCS for DMRS may be the $\pi$/2 BPSK.

For example, the base sequence information 623 for the DMRS may indicate a basic sequence $c_{init}$ for generating the DMRS. For example, the basic sequence information 623 may have a field length of 30 bits.

Referring to FIG. 6A, the extension type 600 may include at least one reserved bit. For example, the at least one reserved bit may include additional (or optional) information for the DMRS processing.

According to an embodiment, the extension type 600 may be used by concatenating (or merging) with a designated section type. For example, the designated section type may include a section type 5 for UE scheduling information. However, the embodiment of the present disclosure is not limited thereto. In a case that the designated section type is the section type 5, the designated section type may include UE identification information (ueID). In this case, a first terminal (e.g., UE1) indicated by the UE identification information may represent a terminal that has transmitted the DMRS associated with the extension type 600.

According to an embodiment, the extension type 600 may be used by concatenating with the designated section type and a designated extension type. Referring to FIG. 6A, the designated extension type may be concatenated with respect to the extension type 600 in a region 600a. For example, the designated extension type may include an extension type 10 (SE10) for group configuration of multiple ports. However, the embodiment of the present disclosure is not limited thereto. When the designated extension type is the extension type 10, the extension type 10 may be used to indicate at least one UE identification information (ueID). In this case, the at least one UE identification information (ueID) may indicate the first terminal indicated by the designated section type. In other words, the designated extension type and the designated section type may indicate the same first terminal.

Alternatively, in a case that the extension type 600 is used together with the designated extension type and the designated section type, and the at least one identification information of the designated extension type includes a plurality of pieces of identification information, an extension type for antenna mapping may not be concatenated. For example, the extension type for the antenna mapping may be referred to as extension type 16. In a case that the extension type 600 is used together with the designated extension type and the designated section type, and the at least one identification information of the designated extension type includes the plurality of pieces of identification information, since it is impossible to distinguish the plurality of pieces of identification information, the extension type for the antenna mapping may not be used together.

The extension type 600 of FIG. 6A is only exemplary, and the embodiment of the present disclosure is not limited thereto. For example, positions and lengths of the parameters in the extension type 600 may be changed.

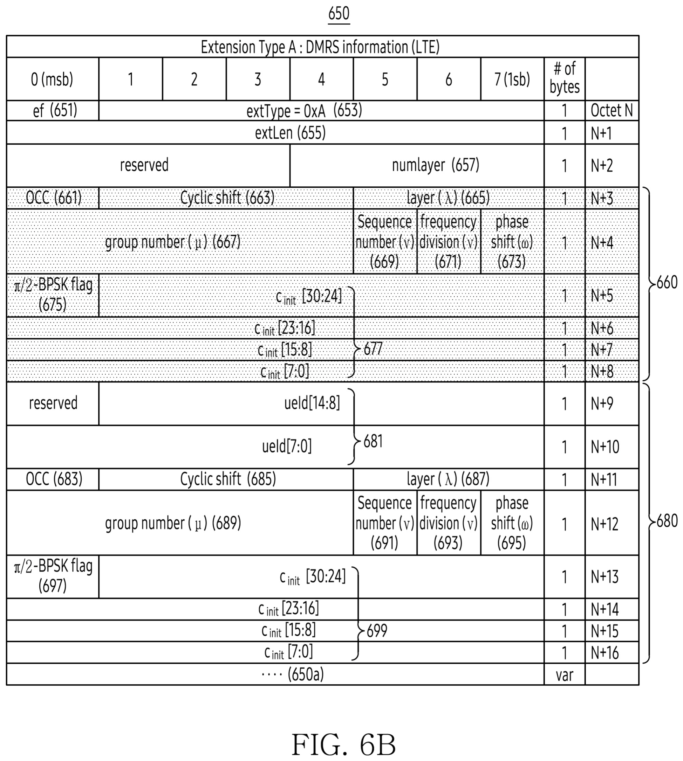

FIG. 6B illustrates an example of an extension type for DMRS processing including user equipment (UE) information.

In FIG. 6B, an example of an extension type 650 for the DMRS processing is illustrated. For example, the DMRS processing may represent processing for an uplink DMRS (hereinafter referred to as DMRS). For example, DU 210 may transmit (or provide) a control plane message including information on the extension type 650 to RU 220. Accordingly, the RU 220 may perform the DMRS processing based on the control plane message (or the extension type 650). For example, the RU 220 may receive an uplink signal from a terminal 120. For example, the RU 220 may perform the DMRS processing based on the control plane message (or the extension type 650). For example, the RU 220 may be associated with a class A or a class B.

Referring to FIG. 6B, the extension type 650 for the DMRS processing may include information required to perform the DMRS processing. The extension type 650 may be referred to as extension type information or section extension (SE). For example, the extension type 650 may be used in long term evolution (LTE). For example, the DMRS processed based on the extension type 650 may be DMRS processed through an LTE communication technique.

According to an embodiment, the extension type 650 may include a common parameter. For example, the common parameter may include an extension flag (ef) 651, an extension type (extType) 653, and an extension length (extLen) 655.

For example, the ef 651 may be used to indicate whether there is another extension type following the extension type 650. For example, the ef 651 may have a field length of 1 bit. For example, in a case that a value of the ef 651 is 1, the other extension type may exist. Alternatively, in a case that the value of the ef 651 is 0, the other extension type may not exist. The ef 651 may be referred to as an extension flag.

For example, the extType 653 may be used to indicate the extension type 650. For example, the extType 653 may provide an extension type that provides specific additional parameters to a subject data extension. For example, the extType 653 may have a field length of 7 bits. For example, the extType 653 may have different values for each extension type. For example, the extType 653 of the extension type 650 for the DMRS processing may include 0×A. The A may represent an arbitrary order or number. The A may represent a number of two or more digits (e.g., 25). The extension type 650 in which the extension type 653 is the A may be referred to as an extension type A. The extType 653 may be referred to as an index of extension type information.

For example, the extLen 655 may provide a length of the extension type 650. For example, the extLen 655 may provide the length of the extension type 650 in units of 32 bits (or 4 bytes) words. For example, the extLen 655 may have a field length of 8 bits. However, an embodiment of the present disclosure is not limited thereto. For example, according to information included in the extension type 650, the extLen 655 may have a field length of 16 bits or more. The extLen 655 may be referred to as a length of the extension type information. For example, the extension type 650 may have a length of 8 bytes indicated by the extLen 655.

According to an embodiment, the extension type 650 may include information 657 indicating the number of at least one terminal associated with multiple ports. For example, the information 657 may be used to indicate the number of the at least one terminal associated with the multiple ports. For example, the information 657 may indicate the number of layers associated with the multiple ports. The number of associated layers may correspond to the number of the at least one terminal. For example, the information 657 may have a field length of 4 bits.

According to an embodiment, the extension type 650 may include first DMRS information 660 for a first terminal. For example, the first terminal may represent a terminal UE1 indicated by the designated section type concatenated with the extension type 650. For example, the first DMRS information 660 may include orthogonal cover code (OCC) information 661 of the DMRS, cyclic shift information 663 for the DMRS, layer information 665 for the DMRS, a group number 667 for the DMRS, a sequence number 669 for the DMRS, frequency density information 671 of the DMRS, phase shift information 673 of the DMRS, a $\pi/2$ BPSK flag 675 for the DMRS, and base sequence information 677 for the DMRS. For example, content regarding parameters included in the first DMRS information 660 may be substantially equally applied to content regarding parameters included in the extension type 600 of FIG. 6A.

According to an embodiment, the extension type 650 may include second DMRS information 680. For example, the second DMRS information 680 may include identification information 681 of a second terminal associated with another DMRS, orthogonal cover code (OCC) information 683 of the other DMRS, cyclic shift information 685 for the other DMRS, layer information 687 for the other DMRS, a group number 689 for the other DMRS, a sequence number 691 for the other DMRS, frequency density information 693 of the other DMRS, phase shift information 695 of the other DMRS, a $\pi/2$ BPSK flag 697 for the other DMRS, and base sequence information 699 for the other DMRS.

For example, the identification information 681 may represent identification information UE2 for indicating the second terminal. For example, the identification information 681 may have a field length of 15 bits. For example, the second terminal may represent a terminal indicated by the designated extension type concatenated with the extension type 650. For example, in a case that the designated section type indicates the first terminal, and the designated extension type indicates the second terminal, the extension type 650 may include the identification information 681 to distinguish different terminals (e.g., the first terminal and the second terminal) in which the designated section type and the designated extension type indicate. As the identification information 681 is used, the extension type 650 may include a DMRS information set (e.g., the first DMRS information 660 and the second DMRS information 670) for a plurality of terminals. The RU 220 may perform DMRS processing on the plurality of terminals based on the extension type 650. In FIG. 6B, an example of the extension type 650 including DMRS information on two terminals is illustrated, but the embodiment of the present disclosure is not limited thereto. For example, in a case that the number of terminals indicated by the designated extension type is changed, the number of DMRS information included in the extension type 650 may be changed.

For example, content regarding parameters included in the second DMRS information 680 may be substantially equally applied to the content regarding the parameters included in the extension type 600 of FIG. 6A.

Referring to FIG. 6B, the extension type 650 may include at least one reserved bit. For example, the at least one reserved bit may include additional (or optional) information for the DMRS processing.

According to an embodiment, the extension type 650 may be used by concatenating (or merging) with the designated section type. For example, the designated section type may include a section type 5 for UE scheduling information. However, the embodiment of the present disclosure is not limited thereto. In a case that the designated section type is the section type 5, the designated section type may include UE identification information (ueID). In this case, the first terminal indicated by the UE identification information may represent a terminal that has transmitted the DMRS associated with the extension type 650. In a case that only the designated section type is concatenated with the extension type 650, the identification information 681 may indicate the first terminal, and the information 657 may indicate 1. In other words, both the first DMRS information 660 and the second DMRS information 680 included in the extension type 650 may be used to process the DMRS in which the first terminal has transmitted.

According to an embodiment, the extension type 650 may be used by concatenating with the designated section type and a designated extension type. Referring to FIG. 6A, the designated extension type may be concatenated with respect to the extension type 650 in a region 650a. For example, the designated extension type may include the extension type 10 (SE10) for group configuration of the multiple ports. However, the embodiment of the present disclosure is not limited thereto. In a case that the designated extension type is the extension type 10, the extension type 10 may be used to indicate at least one UE identification information (ueID). In this case, the at least one UE identification information (ueID) may indicate the first terminal or the second terminal. In a case that a terminal indicated by the designated extension type is the first terminal, the identification information 681 may indicate the first terminal, and the information 657 may indicate 1. Alternatively, in a case that the terminal indicated by the designated extension type is the second terminal, the identification information 681 may indicate the second terminal, and the information 657 may indicate 2. In other words, the first DMRS information 660 may be used to process the DMRS in which the first terminal has transmitted, and the second DMRS information 680 may be used to process the other DMRS in which the second terminal has transmitted.

When referring to the above, in a case that the extension type 650 is used together with the designated extension type and the designated section type, and the at least one identification information of the designated extension type includes a plurality of pieces of identification information, unlike the extension type 600 of FIG. 6A, an extension type for antenna mapping may also be concatenated with respect to the extension type 650. For example, the extension type for the antenna mapping may be referred to as an extension type 16. In a case that the extension type 650 is used together with the designated extension type and the designated section type, and the at least one identification information of the designated extension type includes the plurality of pieces of identification information, since it is possible to distinguish the plurality of pieces of identification information, the extension type for the antenna mapping may be used together.

The extension type 650 of FIG. 6B is only exemplary, and the embodiment of the present disclosure is not limited thereto. For example, positions and lengths of the parameters in the extension type 650 may be changed.

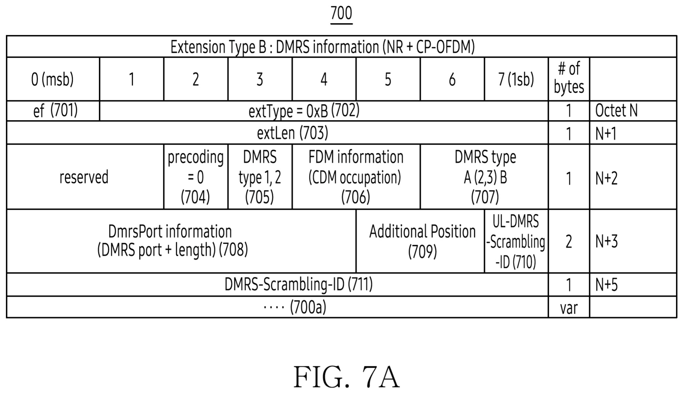

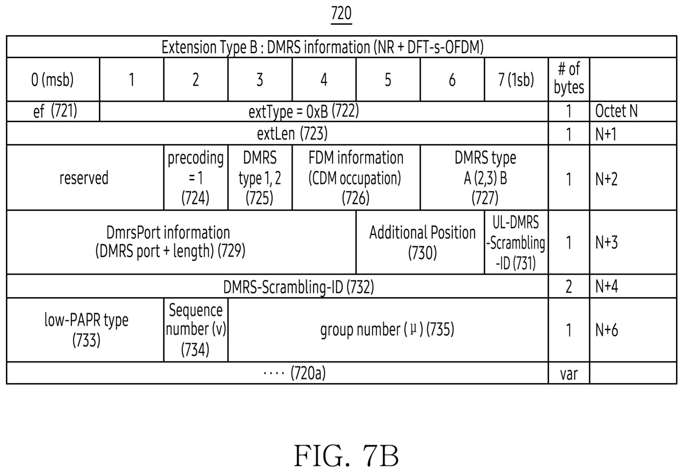

FIGS. 7A and 7B illustrate an example of an extension type for DMRS processing.

In FIG. 7A, an example of an extension type 700 for the DMRS processing is illustrated. For example, the DMRS processing may represent processing for an uplink DMRS (hereinafter referred to as DMRS). For example, DU 210 may transmit (or provide) a control plane message including information on the extension type 700 to RU 220. Accordingly, the RU 220 may perform the DMRS processing based on the control plane message (or the extension type 700). For example, the RU 220 may receive an uplink signal from a terminal 120. For example, the RU 220 may perform the DMRS processing based on the control plane message (or the extension type 700). For example, the RU 220 may be associated with a class A or a class B.

Referring to FIG. 7A, the extension type 700 for the DMRS processing may include information required to perform the DMRS processing. The extension type 700 may be referred to as extension type information or section extension (SE). For example, the extension type 700 may be used in a new radio (NR). For example, the DMRS processed based on the extension type 700 may be DMRS processed through an NR communication technique.

According to an embodiment, the extension type 700 may include a common parameter. For example, the common parameter may include an extension flag (ef) 701, an extension type (extType) 702, and an extension length (extLen) 703.

For example, the ef 701 may be used to indicate whether there is another extension type following the extension type 700. For example, the ef 701 may have a field length of 1 bit. For example, in a case that a value of the ef 701 is 1, the other extension type may exist. Alternatively, in a case that the value of the ef 701 is 0, the other extension type may not exist. The ef 701 may be referred to as an extension flag.

For example, the extType 702 may be used to indicate the extension type 700. For example, the extType 702 may provide an extension type that provides specific additional parameters to a subject data extension. For example, the extType 702 may have a field length of 7 bits. For example, the extType 702 may have different values for each extension type. For example, the extType 702 of the extension type 700 for the DMRS processing may include 0×B. The B may represent an arbitrary order or number. The B may represent a number of two or more digits (e.g., 26). The extension type 700 in which the extType 702 is the B may be referred to as an extension type B. The extType 702 may be referred to as an index of the extension type information.

For example, the extLen 703 may provide a length of the extension type 700. For example, the extLen 703 may provide the length of the extension type 700 in units of 32 bits (or 4 bytes) words. For example, the extLen 703 may have a field length of 8 bits. However, an embodiment of the present disclosure is not limited thereto. For example, according to information included in the extension type 700, the extLen 703 may have a field length of 16 bits or more. The extLen 703 may be referred to as a length of the extension type information. For example, the extension type 700 may have a length of 8 bytes indicated by the extLen 703.

According to an embodiment, the extension type 700 may include parameters for the DMRS processing. For example, the parameters for the DMRS processing may include waveform information 704 of the DMRS, configuration type information 705 of the DMRS, frequency division multiplexing (FDM) information 706 of the DMRS, mapping type information 707 of the DMRS, antenna port information 708 for the DMRS, additional position information 709 of the DMRS, first scrambling identification information 710 of the DMRS, and second scrambling identification information 711 of the DMRS.

For example, the waveform information 704 of the DMRS may be used to indicate a transform precoding technique of the DMRS. For example, the waveform information 704 of the DMRS may have a field length of 1 bit. For example, in a case that the waveform information 704 of the DMRS is 0, cyclic prefix-orthogonal frequency division multiplexing (CP-OFDM) may be indicated. Alternatively, in a case that the waveform information 704 of the DMRS is 1, discrete Fourier transform-spread-orthogonal frequency division multiplexing (DFT-s-OFDM) may be indicated. The extension type 700 of FIG. 7A may represent an example of a case when the waveform information 704 of the DMRS is 0.

For example, the configuration type information 705 of the DMRS may be used to indicate a configuration type 1 or a configuration type 2 of the DMRS. For example, the configuration type information 705 of the DMRS may have a field length of 1 bit. For example, in a case that the configuration type information 705 of the DMRS is 0, the configuration type 1 may be indicated. Alternatively, for example, in a case that the configuration type information 705 of the DMRS is 1, the configuration type 2 may be indicated.

For example, the FDM information 706 for the DMRS may indicate whether another DMRS is mapped to symbols adjacent to a symbol to which the DMRS will be mapped based on FDM. Alternatively, for example, the FDM information 706 may indicate whether code division multiplexing (CDM) is occupied. The FDM information 706 may be associated with the configuration type information 705 of the DMRS. For example, the FDM information 706 may have a field length of 2 bits. For example, in a case that the configuration type information 705 indicates configuration information 1, it may indicate whether the other DMRS is mapped to a symbol B adjacent to a symbol A mapped based on the configuration information 1. In this case, whether to occupy the symbol B may be indicated by using 1 bit among 2 bits included in the FDM information 706. For example, in a case that the configuration type information 705 indicates configuration information 2, it may indicate whether other DMRS is mapped to the symbol B and a symbol C adjacent to the symbol A mapped based on the configuration information 2. In this case, whether to occupy the symbol B and the symbol C may be indicated by using 2 bits included in the FDM information 706.

For example, the mapping type information 707 of the DMRS may indicate a mapping type A or a mapping type B of the DMRS. For example, the mapping type A or the mapping type B may indicate information indicating a position of a symbol to which the DMRS is mapped. For example, the mapping type information 707 of the DMRS may have a field length of 2 bits. For example, in a case that the mapping type information 707 of the DMRS is 00, the mapping type B may be indicated. For example, in a case that the mapping type information 707 of the DMRS is 10, pos2 of the mapping type A may be indicated. The pos2 may represent a symbol 2. For example, in a case that the mapping type information 707 of the DMRS is 11, pos3 of the mapping type A may be indicated. The pos3 may represent a symbol 3.

For example, the antenna port information 708 for the DMRS may include information on an antenna port associated with the DMRS. For example, the antenna port information 708 for the DMRS may have a field length of 5 bits. The antenna port information 708 for the DMRS may indicate an index and a length of the antenna port together. The antenna port information 708 may indicate the index of the antenna port according to the length. For example, in a case that a value of the length is 0, the index of the antenna port may indicate antenna ports 0 to 3 (1000 to 1003) (e.g., configuration information 1) or antenna ports 0 to 5 (1000 to 1005) (e.g., configuration information 2). In a case that the value of the length is 0 or 1, the index of the antenna port may indicate antenna ports 0 to 7 (1000 to 1007) (e.g., configuration information 1) or antenna ports 0 to 11 (1000 to 1011) (e.g., configuration information 2). Additionally, for example, one or two DMRS symbols may be set in a case of antenna ports 0 to 5 (1000 to 1005), and two DMRS symbols may be set in a case of antenna ports 6 to 1 (1006 to 1011). The antenna port information 708 may be used to indicate the above 18 cases.

The additional position information 709 of the DMRS may indicate a position to which the DMRS is additionally mapped. For example, the additional position information 709 of the DMRS may have a field length of 2 bits. For example, in a case that the additional position information 709 of the DMRS is 00, the additional position may be pos0. For example, in a case that the additional position information 709 of the DMRS is 01, the additional position may be pos1. For example, in a case that the additional position information 709 of the DMRS is 10, the additional position may be pos2. For example, in a case that the additional position information 709 of the DMRS is 11, the additional position may be pos3.

For example, the first scrambling identification information 710 of the DMRS may include a scrambling identifier (SCID) for generating the DMRS. For example, the first scrambling identification information 710 may be referred to as UL-DMRS-Scrambling-ID. For example, the first scrambling identification information 710 may have a field length of 1 bit. For example, the first scrambling identification information 710 may have a value of 0 or 1.

For example, the second scrambling identification information 711 of the DMRS may include a scrambling identifier for generating the DMRS. For example, the second scrambling identification information 711 may be referred to as DMRS-Scrambling-ID. For example, the second scrambling identification information 711 may have a field length of 16 bits. For example, the second scrambling identification information 711 may have a value ranging from 0 to 65535.

Referring to FIG. 7A, the extension type 700 may include at least one reserved bit. For example, the at least one reserved bit may include additional (or optional) information for the DMRS processing.

According to an embodiment, the extension type 700 may be used by concatenating (or merging) with a designated section type. For example, the designated section type may include a section type 5 for UE scheduling information. However, the embodiment of the present disclosure is not limited thereto. In a case that the designated section type is the section type 5, the designated section type may include UE identification information (ueID). In this case, a first terminal (e.g., UE1) indicated by the UE identification information may indicate a terminal that has transmitted the DMRS associated with the extension type 700.

According to an embodiment, the extension type 700 may be used by concatenating with the designated section type and a designated extension type. Referring to FIG. 7A, the designated extension type may be concatenated with respect to the extension type 700 in a region 700a. For example, the designated extension type may include an extension type 10 (SE10) for group configuration of multiple ports. However, the embodiment of the present disclosure is not limited thereto. In a case that the designated extension type is the extension type 10, the extension type 10 may be used to indicate at least one UE identification information (ueID). In this case, the at least one UE identification information (ueID) may indicate the first terminal indicated by the designated section type. In other words, the designated extension type and the designated section type may indicate the same first terminal.

Alternatively, in a case that the extension type 700 is used together with the designated extension type and the designated section type, and the at least one identification information of the designated extension type includes a plurality of pieces of identification information, an extension type for antenna mapping may not be concatenated. For example, the extension type for the antenna mapping may be referred to as an extension type 16. In a case that the extension type 700 is used together with the designated extension type and the designated section type, and the at least one identification information of the designated extension type includes the plurality of pieces of identification information, since it is impossible to distinguish the plurality of pieces of identification information, the extension type for the antenna mapping may not be used together.

The extension type 700 of FIG. 7A is only exemplary, and the embodiment of the present disclosure is not limited thereto. For example, positions and lengths of the parameters in the extension type 700 may be changed.

In FIG. 7B, an example of an extension type 720 for the DMRS processing is illustrated. Referring to FIG. 7B, the extension type 720 for the DMRS processing may include information required to perform the DMRS processing. The extension type 720 may be referred to as extension type information or section extension (SE). For example, the extension type 720 may be used in the new radio (NR). For example, the DMRS processed based on the extension type 720 may be DMRS processed through the NR communication technique.

According to an embodiment, the extension type 720 may include a common parameter. For example, the common parameter may include an extension flag (ef) 721, an extension type (extType) 722, and an extension length (extLen) 723. For specific information related to this, the ef 701, the extType 702, and the extLen 703 of FIG. 7A may be applied substantially the same.

According to an embodiment, the extension type 720 may include parameters for the DMRS processing. For example, the parameters for the DMRS processing may include waveform information 724 of the DMRS, configuration type information 725 of the DMRS, frequency division multiplexing (FDM) information 726 of the DMRS, mapping type information 727 of the DMRS, antenna port information 729 for the DMRS, additional position information 730 of the DMRS, first scrambling identification information 731 of the DMRS, and second scrambling identification information 732 of the DMRS.

For example, the waveform information 724 of the DMRS may be used to indicate a transform precoding technique of the DMRS. For example, the waveform information 724 of the DMRS may have a field length of 1 bit. For example, in a case that the waveform information 724 of the DMRS is 0, cyclic prefix-orthogonal frequency division multiplexing (CP-OFDM) may be indicated. Alternatively, in a case that the waveform information 724 of the DMRS is 1, discrete Fourier transform-spread-orthogonal frequency division multiplexing (DFT-s-OFDM) may be indicated. The extension type 720 of FIG. 7B may represent an example of a case when the waveform information 724 of the DMRS is 1.

For example, the mapping type information 725 of the DMRS may correspond to the mapping type information 705 of the DMRS of FIG. 7A. The FDM information 726 for DMRS may correspond to the FDM information 706 for DMRS of FIG. 7A. The configuration type information 727 of the DMRS may correspond to the configuration type information 707 of the DMRS of FIG. 7A. The antenna port information 729 for the DMRS may correspond to the antenna port information 708 for the DMRS of FIG. 7A. The additional position information 730 of the DMRS may correspond to the additional position information 709 of the DMRS of FIG. 7A. Content of the first scrambling identification information 731 of the DMRS may include the first scrambling identification information 710 of the DMRS of FIG. 7A. Content of the second scrambling identification information 732 of the DMRS may include the second scrambling identification information 711 of the DMRS of FIG. 7A. Therefore, hereinafter, a redundant description will be omitted.

According to an embodiment, in a case that the waveform information 724 of the DMRS is 1, the extension type 720 may include peak to average power ratio (low-PAPR) information 733, a sequence number 734, and a group number 735. For example, unlike the extension type 700 of FIG. 7A, the extension type 720 may further include the low-PAPR information 733, the sequence number 734, and the group number 735.

For example, the low-PAPR information 733 may indicate a type of a low-PAPR. The low-PAPR may represent information for generating a sequence of the DMRS. For example, the low-PAPR information 733 may have a field length of 2 bits. For example, in a case that the low-PAPR information 733 is 00, it may represent a case when the low-PAPR is 'disable'. For example, in a case that the low-PAPR information 733 is 01, it may represent a case when the low-PAPR is type1. For example, in a case that the low-PAPR information 733 is 10, it may represent a case when the low-PAPR is type2.

For example, the sequence number 734 for the DMRS may be used to indicate one of two sequences in a sequence group. The sequence numbers 734 (v) may be referred to as a sequence index. For example, the sequence number 734 (v) may represent a length of 1 bit. For example, in a case that the sequence number 734 (v) is 0, a first value (e.g., 0) may be indicated. Alternatively, for example, in a case that the sequence number 734 (v) is 1, a second value (e.g., 1) may be indicated.

For example, the group number 735 for the DMRS may indicate the sequence group including a sequence for generating the DMRS. For example, the group number 735 ($\mu$) may have a field length of 5 bits. For example, the group number 735 ($\mu$) may be one of 0 to 29. In other words, the number of groups for the sequence for generating the DMRS may be 30. However, the embodiment of the present disclosure is not limited thereto.

For example, although not illustrated in FIG. 7B, the extension type 720 may further include a $\pi/2$ BPSK flag for the DMRS. The $\pi/2$ BPSK flag may indicate whether a modulation and coding scheme (MCS) for generating the DMRS is $\pi/2$ BPSK. For example, the $\pi/2$ BPSK flag may have a field length of 1 bit. For example, in a case that the $\pi/2$ BPSK flag is 0, it may represent a case when the $\pi/2$ BPSK is 'disable'. For example, in a case that the $\pi/2$ BPSK flag is 1, it may represent a case when the $\pi/2$ BPSK is 'enable'.

Referring to FIG. 7B, the extension type 720 may include at least one reserved bit. For example, the at least one reserved bit may include additional (or optional) information for the DMRS processing.

According to an embodiment, the extension type 720 may be used by concatenating (or merging) with a designated section type. For example, the designated section type may include a section type 5 for UE scheduling information. However, the embodiment of the present disclosure is not limited thereto. In a case that the designated section type is the section type 5, the designated section type may include UE identification information (ueID). In this case, a first terminal (e.g., UE1) indicated by the UE identification information may indicate a terminal that has transmitted the DMRS associated with the extension type 720.

According to an embodiment, the extension type 720 may be used by concatenating with the designated section type and a designated extension type. Referring to FIG. 7A, the designated extension type may be concatenated with respect to the extension type 720 in a region 720a. For example, the designated extension type may include an extension type 10 (SE10) for group configuration of multiple ports. However, the embodiment of the present disclosure is not limited thereto. In a case that the designated extension type is the extension type 10, the extension type 10 may be used to indicate at least one UE identification information (ueID). In this case, the at least one UE identification information (ueID) may indicate the first terminal indicated by the designated section type. In other words, the designated extension type and the designated section type may indicate the same first terminal.

Alternatively, in a case that the extension type 720 is used together with the designated extension type and the designated section type, and the at least one identification information of the designated extension type includes a plurality of pieces of identification information, an extension type for antenna mapping may not be concatenated. For example, the extension type for the antenna mapping may be referred to as the extension type 16. In a case that the extension type 720 is used together with the designated extension type and the designated section type, and the at least one identification information of the designated extension type includes the plurality of pieces of identification information, since it is impossible to distinguish the plurality of pieces of identification information, the extension type for the antenna mapping may not be used together.

The extension type 720 of FIG. 7B is only exemplary, and the embodiment of the present disclosure is not limited thereto. For example, positions and lengths of the parameters in the extension type 720 may be changed.

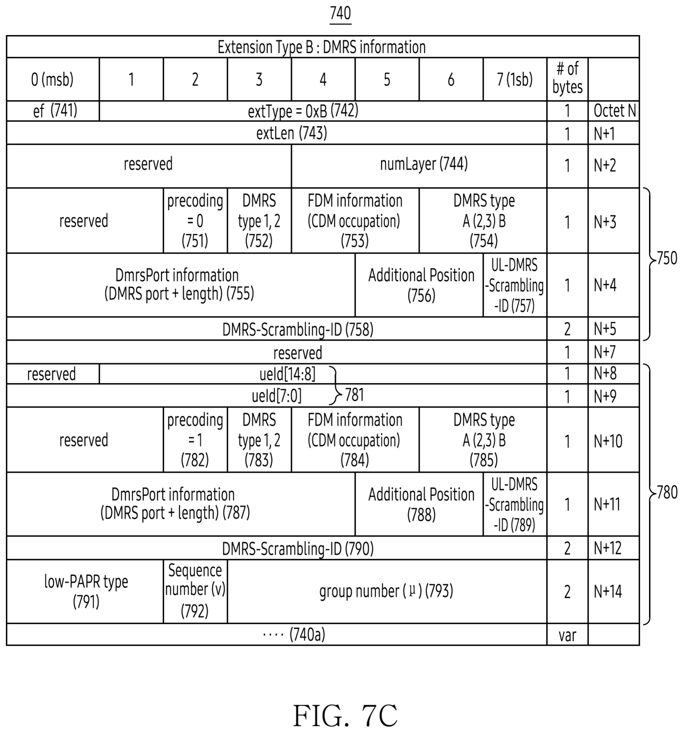

FIG. 7C illustrates an example of an extension type for DMRS processing including user equipment (UE) information.

FIG. 7C illustrates an example of an extension type 740 for the DMRS processing. For example, the DMRS processing may represent processing for an uplink DMRS (hereinafter referred to as DMRS). For example, DU 210 may transmit (or provide) a control plane message including information on the extension type 740 to RU 220. Accordingly, the RU 220 may perform the DMRS processing based on the control plane message (or the extension type 740). For example, the RU 220 may receive an uplink signal from a terminal 120. For example, the RU 220 may perform the DMRS processing based on the control plane message (or the extension type 740). For example, the RU 220 may be associated with a class A or a class B.

Referring to FIG. 7C, the extension type 740 for the DMRS processing may include information required to perform the DMRS processing. The extension type 740 may be referred to as extension type information or section extension (SE). For example, the extension type 740 may be used in a new radio (NR). For example, the DMRS processed based on the extension type 740 may be DMRS processed through an NR communication technique.

According to an embodiment, the extension type 740 may include a common parameter. For example, the common parameter may include an extension flag (ef) 741, an extension type (extType) 742, and an extension length (extLen) 743. For specific information related to this, the ef 701, the extType 702, and the extLen 703 of FIG. 7A may be applied substantially the same.

According to an embodiment, the extension type 740 may include information 744 indicating the number of at least one terminal associated with multiple ports. For example, the information 744 may be used to indicate the number of the at least one terminal associated with the multiple ports. For example, the information 744 may indicate the number of layers associated with the multiple ports. The number of associated layers may correspond to the number of the at least one terminal. For example, the information 744 may have a field length of 4 bits.

According to an embodiment, the extension type 740 may include first DMRS information 750 for a first terminal. For example, the first terminal may represent a terminal UE1 indicated by the designated section type concatenated with the extension type 740. For example, the first DMRS information 750 may include waveform information 751 of the DMRS, configuration type information 752 of the DMRS, FDM information 753 of the DMRS, mapping type information 754 of the DMRS, antenna port information 755 for the DMRS, additional position information 756 of the DMRS, first scrambling identification information 757 of the DMRS, and second scrambling identification information 758 of the DMRS. For example, content regarding parameters included in the first DMRS information 750 may be substantially equally applied to content regarding the parameters included in extension type 700 of FIG. 7A.

According to an embodiment, the extension type 740 may include second DMRS information 780. For example, the second DMRS information 780 may include identification information 781 of a second terminal associated with another DMRS, waveform information 782 of the other DMRS, configuration type information 783 of the other DMRS, FDM information 784 of the other DMRS, mapping type information 785 of the other DMRS, antenna port information 787 for the other DMRS, additional position information 788 of the other DMRS, first scrambling identification information 789 of the other DMRS, and second scrambling identification information 790 of the other DMRS. In addition, according to an embodiment, in a case that the waveform information 782 of the other DMRS is 1, the extension type 740 may include peak to average power ratio (low-PAPR) information 791, a sequence number 792, and a group number 793. For example, unlike the first DMRS information 750 of the extension type 740, the second DMRS information 780 of the extension type 740 may further include the low-PAPR information 791, the sequence number 792, and the group number 793.

For example, the identification information 781 may represent identification information UE2 for indicating the second terminal. For example, the identification information 781 may have a field length of 15 bits. For example, the second terminal may represent a terminal indicated by a designated extension type concatenated with the extension type 740. For example, in a case that the designated section type indicates the first terminal, and the designated extension type indicates the second terminal, the extension type 740 may include the identification information 781 to distinguish different terminals (e.g., the first terminal and the second terminal) in which the designated section type and the designated extension type indicate. As the identification information 781 is used, the extension type 740 may include a DMRS information set (e.g., the first DMRS information 750 and the second DMRS information 780) for a plurality of terminals. The RU 220 may perform DMRS processing on the plurality of terminals based on the extension type 740. In FIG. 7C, an example of the extension type 740 including DMRS information on two terminals is illustrated, but the embodiment of the present disclosure is not limited thereto. For example, in a case that the number of terminals indicated by the designated extension type is changed, the number of DMRS information included in the extension type 740 may be changed.

For example, content regarding parameters included in the second DMRS information 780 may be substantially equally applied to content regarding the parameters included in the extension type 720 of FIG. 7B.

Referring to FIG. 7C, the extension type 740 may include at least one reserved bit. For example, the at least one reserved bit may include additional (or optional) information for the DMRS processing.

According to an embodiment, the extension type 740 may be used by concatenating (or merging) with the designated section type. For example, the designated section type may include a section type 5 for UE scheduling information. However, the embodiment of the present disclosure is not limited thereto. In a case that the designated section type is the section type 5, the designated section type may include UE identification information (ueID). In this case, the first terminal indicated by the UE identification information may represent a terminal that has transmitted the DMRS associated with the extension type 740. In a case that only the designated section type is concatenated with the extension type 740, the identification information 781 may indicate the first terminal, and the information 744 may indicate 1. In other words, both the first DMRS information 750 and the second DMRS information 780 included in the extension type 740 may be used to process the DMRS in which the first terminal has transmitted.

According to an embodiment, the extension type 740 may be used by concatenating with the designated section type and the designated extension type. Referring to FIG. 7C, the designated extension type may be concatenated with respect to the extension type 740 in a region 740a. For example, the designated extension type may include an extension type 10 (SE10) for group configuration of multiple ports. However, the embodiment of the present disclosure is not limited thereto. In a case that the designated extension type is the extension type 10, the extension type 10 may be used to indicate at least one UE identification information (ueID). In this case, the at least one UE identification information (ueID) may indicate the first terminal or the second terminal. In a case that a terminal indicated by the designated extension type is the first terminal, the identification information 781 may indicate the first terminal, and the information 744 may indicate 1. Alternatively, in a case that the terminal indicated by the designated extension type is the second terminal, the identification information 781 may indicate the second terminal, and the information 744 may indicate 2. In other words, the first DMRS information 750 may be used to process the DMRS in which the first terminal has transmitted, and the second DMRS information 780 may be used to process the other DMRS in which the second terminal has transmitted.

When referring to the above, in a case that the extension type 740 is used together with the designated extension type and the designated section type, and the at least one identification information of the designated extension type includes a plurality of pieces of identification information, unlike the extension type 700 of FIG. 7A or the extension type 720 of FIG. 7B, an extension type for antenna mapping may also be concatenated with respect to the extension type 740. For example, the extension type for the antenna mapping may be referred to as an extension type 16. In a case that the extension type 740 is used together with the designated extension type and the designated section type, and the at least one identification information of the designated extension type includes the plurality of pieces of identification information, since it is possible to distinguish the plurality of pieces of identification information, the extension type for the antenna mapping may be used together.

The extension type 740 of FIG. 7C is only exemplary, and the embodiment of the present disclosure is not limited thereto. For example, positions and lengths of the parameters in the extension type 740 may be changed.

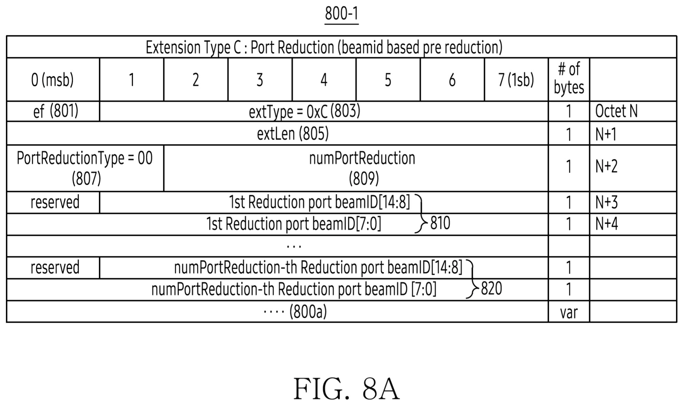

FIGS. 8A to 8C illustrate an example of an extension type for port reduction.

FIGS. 8A to 8C illustrate an example of an extension type 800-1, 800-2, or 800-3 for the port reduction that may be performed in the DMRS processing. For example, the port reduction may represent the dimension reduction that may be performed together with the DMRS extraction 524 of FIG. 5A (or the DMRS extraction 574 of FIG. 5B). For example, the DMRS processing may represent processing for an uplink DMRS (hereinafter referred to as DMRS). For example, DU 210 may transmit (or provide) a control plane message including information on the extension type 800-1, 800-2, or 800-3 to RU 220. Accordingly, the RU 220 may perform the port reduction based on the control plane message (or the extension type 800-1, 800-2, or 800-3). For example, the RU 220 may be associated with a class A or a class B.

Referring to FIGS. 8A to 8C, the extension type 800-1 for the port reduction may include information for reducing an order a dimension from a dimension corresponding to antenna elements included in the RU 220 to a designated value. The extension type 800-1, 800-2, or 800-3 may be referred to as extension type information or section extension (SE).

According to an embodiment, the extension type 800-1, 800-2, or 800-3 may include a common parameter. For example, the common parameter may include an extension flag (ef) 801, an extension type (extType) 803, and an extension length (extLen) 805.

For example, the ef 801 may be used to indicate whether there is another extension type following the extension type 800-1, 800-2, or 800-3. For example, the ef 801 may have a field length of 1 bit. For example, in a case that a value of the ef 801 is 1, the other extension type may exist. Alternatively, in a case that the value of the ef 801 is 0, the other extension type may not exist. The ef 801 may be referred to as an extension flag.

For example, the extType 803 may be used to indicate the extension type 800-1, 800-2, or 800-3. For example, the extType 803 may provide an extension type that provides specific additional parameters to a subject data extension.

For example, the extType 803 may have a field length of 7 bits. For example, the extType 803 may have different values for each extension type. For example, the extType 803 of the extension type 800 for DMRS processing may include 0xC. The C may represent an arbitrary order or number. The C may represent a number of two or more digits (e.g., 27). The extension type 800-1, 800-2, or 800-3 in which the extType 803 is the C may be referred to as an extension type C. The extType 803 may be referred to as an index of the extension type information.

For example, the extLen 805 may provide a length of the extension type 800-1, 800-2, or 800-3. For example, the extLen 805 may provide the length of the extension type 800-1, 800-2, or 800-3 in units of 32 bits (or 4 bytes) words. For example, the extLen 805 may have a field length of 8 bits. However, an embodiment of the present disclosure is not limited thereto. For example, according to information included in the extension type 800-1, 800-2, or 800-3, the extLen 805 may have a field length of 16 bits or more. The extLen 805 may be referred to as a length of the extension type information. For example, the extension type 800-1, 800-2, or 800-3 may have a length of 8 bytes indicated by the extLen 805.

According to an embodiment, the extension type 800-1, 800-2, or 800-3 may include type information 807 of the port reduction and information 809 indicating the reduced number of ports of the port reduction.

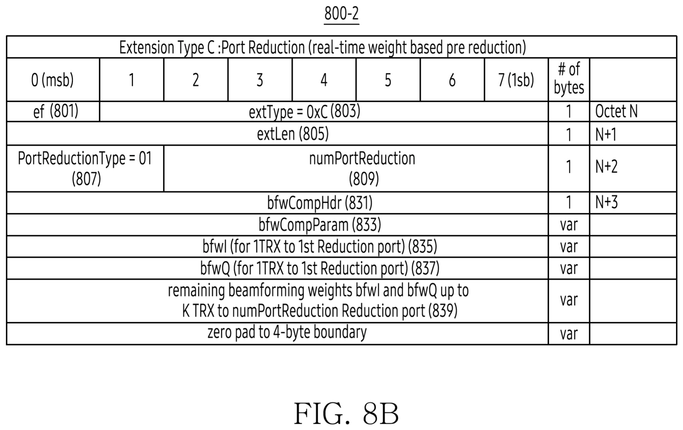

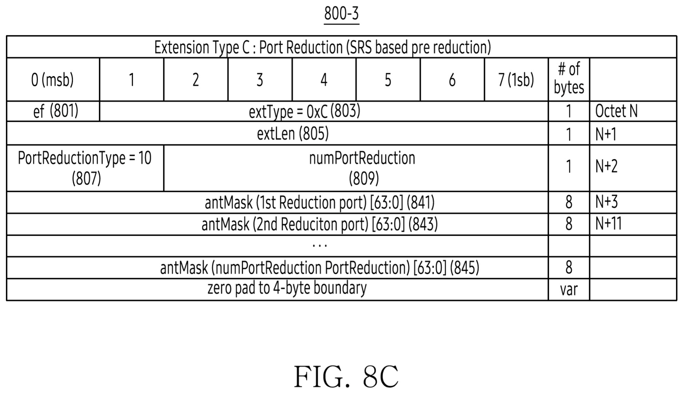

For example, the type information 807 of the port reduction may indicate a type of the port reduction. For example, the port reduction may include beam identity (beam ID)-based pre reduction, real-time weight-based pre reduction, or sounding reference signal (SRS)-based pre reduction. For example, the type information 807 of the port reduction may have a field length of 2 bits. Referring to an example of an extension type 800-1 of FIG. 8A, in a case that the type information 807 of the port reduction is 00, the beam ID-based pre reduction may be indicated. Referring to an example of an extension type 800-2 of FIG. 8B, in a case that the type information 807 of the port reduction is 01, the real-time weight-based pre reduction may be indicated. Referring to an example of an extension type 800-3 of FIG. 8C, in a case that the type information 807 of the port reduction is 10, the SRS-based pre reduction may be indicated.

For example, the information 809 indicating the number of reduced ports may indicate the designated value to be changed from an order corresponding to the antenna elements of the RU 220 based on the port reduction. For example, the information 809 indicating the number of reduced ports may have a field length of 6 bits. In a case that the number of the antenna elements of the RU 220 is 64, the information 809 indicating the reduced number of ports may indicate a value of the 64 or less through the 6bits.

Referring to FIG. 8A, in a case of including the type information 807 of the port reduction in which the extension type 800-1 is 00, the extension type 800-1 may include beam IDs 810 and 820. For example, each of the beam IDs 810 and 820 may define a beam pattern that may be applied to user plane data. For example, the extension type 800-1 may include the beam IDs 810 and 820 corresponding to a number (e.g., n) indicated by the information 809. For example, the beam IDs 810 and 820 may include the first beam ID 810 and the n-th beam ID 820. For example, each of the beam IDs 810 and 820 may have a field length of 15 bits.

Referring to FIG. 8B, in a case of including the type information 807 of the port reduction in which the extension type 800-2 is 01, the extension type 800-2 may include beamforming weight parameters 831, 833, 835, 837, and 839. For example, the extension type 800-2 may include the beamforming weight compression header 831, the beamforming weight compression parameter 833, the beamforming weight in-phase (I) value 835, the beamforming weight quadrature (Q) value 837, and the beamforming weight IQ values 839.

For example, the beamforming weight compression header 831 may indicate a width of an IQ bit for beamforming weights in a specific section within the control plane message. For example, the beamforming weight compression header 831 may have a field length of 8 bits. For example, the beamforming weight compression header 831 may include a first portion (e.g., 4 bits) that indicates the width of the IQ bit and a second portion (e.g., 4 bits) that defines a compression method.

For example, the beamforming weight compression parameter 833 may indicate a compression method associated with the second portion. For example, the beamforming weight compression parameter 833 may have a field length of a variable bit according to the compression method.

For example, each of the beamforming weight I value 835 and the beamforming weight Q value 837 may indicate an I value and a Q value of the beamforming weight. For example, each of the beamforming weight I value 835 and the beamforming weight Q value 837 may have a field length of a bit corresponding to a length indicated based on the first portion. For example, the beamforming weight I value 835 and the beamforming weight Q value 837 may represent a value for a first transmitter and receiver (TRX).

For example, the beamforming weight IQ values 839 may include sets of the I value and the Q value of the beamforming weight corresponding to the antenna elements (e.g., K) included in the RU 220. For example, the beamforming weight IQ values 839 may include an IQ value for a second TRX or an IQ value for the K-th TRX other than the value for the first TRX. In FIG. 8B, the beamforming weight IQ values 839 may be understood to include a total of K-1 sets, such as the beamforming weight I value 835 and the beamforming weight Q value 837.

Referring to FIG. 8C, in a case of including the type information 807 of the port reduction in which the extension type 800-3 is 10, the extension type 800-3 may include antenna mapping masks 841, 843, and 845. The antenna mapping masks 841, 843, and 845 may include a number corresponding to the number (e.g., n) indicated by the information 809. In other words, the antenna mapping masks 841, 843, and 845 may include n masks. For example, each of the antenna mapping masks 841, 843, and 845 may have a field length of 64 bits. For example, each of the antenna mapping masks 841, 843, and 845 may indicate antennas to be reduced for each RX endpoint. For example, each of the antenna mapping masks 841, 843, and 845 may be used to indicate an antenna to be reduced for 64 antennas included in the RU 220.

As described above, the extension type 800-1, 800-2, or 800-3 of FIGS. 8A to 8C may include different reduction information (e.g., the beam IDs 810 and 820 of FIG. 8A, the beamforming weight parameters 831, 833, 835, 837, 839 of FIG. 8B, or the antenna mapping masks 841, 843, and 845 of FIG. 8C) according to a value of the type information 807 of the port reduction. The RU 220 may perform the port reduction based on the extension type 800-1, 800-2, or 800-3. The port reduction may be included in the DMRS processing.

According to an embodiment, when the RU 220 performs the port reduction based on the extension type 800-1, 800-2, or 800-3, an extension type (e.g., extension type 16) for antenna mapping may be used by concatenating with the extension type 800-1, 800-2, or 800-3. In this case, antenna mask information included in the extension type for the antenna mapping may be changed. For example, the antenna mask information included in an extension type for the antenna mapping used without a concatenation may have a field length of 64 bits. Alternatively, the antenna mask information included in the extension type for the antenna mapping used by concatenating with the extension type 800-1, 800-2, or 800-3 may have a field length of a bit adjusted to correspond to the number (e.g., n) indicated by the information 809.

The extension type 800-1 of FIG. 8A, the extension type 800-2 of FIG. 8B, and the extension type 800-3 of FIG. 8C are only exemplary, and the embodiment of the present disclosure is not limited thereto. For example, positions and lengths of parameters in the extension type 800-1 of FIG. 8B, the extension type 800-2 of FIG. 8C, and the extension type 800-3 of FIG. 8C may be changed.

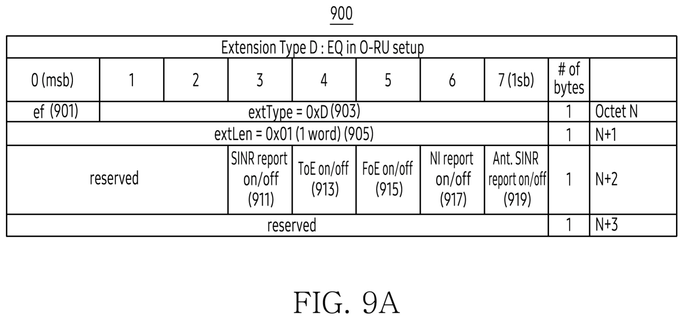

FIG. 9A illustrates an example of an extension type for setting up a class.

FIG. 9A illustrates an example of an extension type 900 for setting up a class A for RU 220. The extension type 900 for setting up the class A may indicate to perform equalizing (EQ) in the RU 220. For example, the RU 220 may support both the class A of FIG. 5A and the class B of FIG. 5B. The class A may be referred to as DMRS beamforming-equalizing (DMRS BF-EQ). The class B may be referred to as DMRS beamforming-non-equalizing (DMRS BF-NEQ). The RU 220 may perform the DMRS processing based on the class A indicated by the extension type 900. Referring to FIG. 5A, the RU 220, which is the class A, may perform equalizing 528, and transmit a signal $y_{eq}$ on which the equalizing 528 has been performed to DU 210 through an uplink message. Since the equalizing 528 has already been performed on the signal $y_{eq}$, it may be difficult for the DU 210 to identify performance information that may be obtained based on DMRS based on the signal $y_{eq}$. Accordingly, in a case of setting up the class A with respect to the RU 220 based on the extension type 900, the DU 210 may indicate the RU 220 together with report requesting information 911, 913, 915, 917, and 919 through the extension type 900.

Referring to FIG. 9A, the extension type 900 for setting up the class A may be referred to as extension type information or section extension (SE). According to an embodiment, the extension type 900 may include a common parameter. For example, the common parameter may include an extension flag (ef) (901), an extension type (extType) 903, and an extension length (extLen) 905.

For example, the ef 901 may be used to indicate whether there is another extension type following the extension type 900. For example, the ef 901 may have a field length of 1 bit. For example, in a case that a value of ef 901 is 1, the other extension types may exist. Alternatively, in a case that the value of ef 901 is 0, the other extension type may not exist. The ef 901 may be referred to as an extension flag.

For example, the extType 903 may be used to indicate the extension type 900. For example, the extType 903 may provide an extension type that provides specific additional parameters to a subject data extension. For example, the extType 903 may have a field length of 7 bits. For example, extType 903 may have different values for each extension type. For example, the extType 903 of the extension type 900 for the DMRS processing may include 0×B. The D may represent an arbitrary order or number. The D may represent a number of two or more digits (e.g., 28). The extension type 900 in which the extension type 903 is the D may be referred to as an extension type D. The extType 903 may be referred to as an index of the extension type information.

For example, the extLen 905 may provide a length of the extension type 900. For example, the extLen 905 may provide the length of the extension type 900 in units of 32 bits (or 4 bytes) words. For example, the extLen 905 may have a field length of 8 bits. However, an embodiment of the present disclosure is not limited thereto. For example, according to information included in the extension type 900, the extLen 905 may have a field length of 16 bits or more. The extLen 905 may be referred to as a length of the extension type information. For example, the extension type 900 may have a length of 8 bytes indicated by the extLen 905.

According to an embodiment, the extension type 900 may include report requesting information 911, 913, 915, 917, and 919. For example, the report requesting information 911, 913, 915, 917, and 919 may include a signal to interference and noise ratio (SINR) reporting setting 911, a timing offset estimation (ToE) reporting setting 913, a frequency offset estimation (FoE) reporting setting 915, a noise and interference (NI) reporting setting 917, or an antenna SINR reporting setting 919.

For example, the SINR reporting setting 911 may indicate the DU 210 to request the RU 220 to report SINR. For example, the SINR reporting setting 911 may have a field length of 1 bit. For example, in a case that the SINR reporting setting 911 is 0, the RU 220 may not perform reporting of the SINR. For example, in a case that the SINR reporting setting 911 is 1, the RU 220 may perform the reporting of the SINR. For example, the SINR may represent an SINR value for a resource block (RB) of a received DMRS.

For example, the ToE reporting setting 913 may indicate the DU 210 to request the RU 220 to report the ToE. For example, the ToE reporting setting 913 may have a field length of 1 bit. For example, in a case that the ToE reporting setting 913 is 0, the RU 220 may not perform reporting of the ToE. For example, in a case that the ToE reporting setting 913 is 1, the RU 220 may perform the reporting of the ToE.

For example, the FoE reporting setting 915 may indicate the DU 210 to request the RU 220 to report the FoE. For example, the FoE reporting setting 915 may have a field length of 1 bit. For example, in a case that the FoE reporting setting 915 is 0, the RU 220 may not perform reporting of the FoE. For example, in a case that the FoE reporting setting 915 is 1, the RU 220 may perform the reporting of the FoE.

For example, the NI reporting setting 917 may indicate the DU 210 to request the RU 220 to report the NI. For example, the NI reporting setting 917 may have a field length of 1 bit. For example, in a case that the NI reporting setting 917 is 0, the RU 220 may not perform reporting of the NI. For example, in a case that the NI reporting setting 917 is 1, the RU 220 may perform the reporting of the NI.

For example, the antenna SINR reporting setting 919 may indicate the DU 210 to request the RU 220 to report the antenna SINR. For example, the antenna SINR reporting setting 919 may have a field length of 1 bit. For example, in a case that the antenna SINR reporting setting 919 is 0, the RU 220 may not perform reporting of the antenna SINR. For example, in a case that the antenna SINR reporting setting 919 is 1, the RU 220 may perform the reporting of the antenna SINR. For example, the antenna SINR may represent an SINR value for an antenna port of the received DMRS.

Referring to the above, the RU 220 may identify that it is set to the class A in a case that a control plane message received from the DU 210 includes the extension type 900. In addition, based on the report requesting information 911, 913, 915, 917, and 919 included in the extension type 900, the RU 220 may identify information to be reported to the DU 210.

The extension type 900 of FIG. 9A is only exemplary, and the embodiment of the present disclosure is not limited thereto. For example, positions and lengths of parameters in the extension type 900 may be changed.

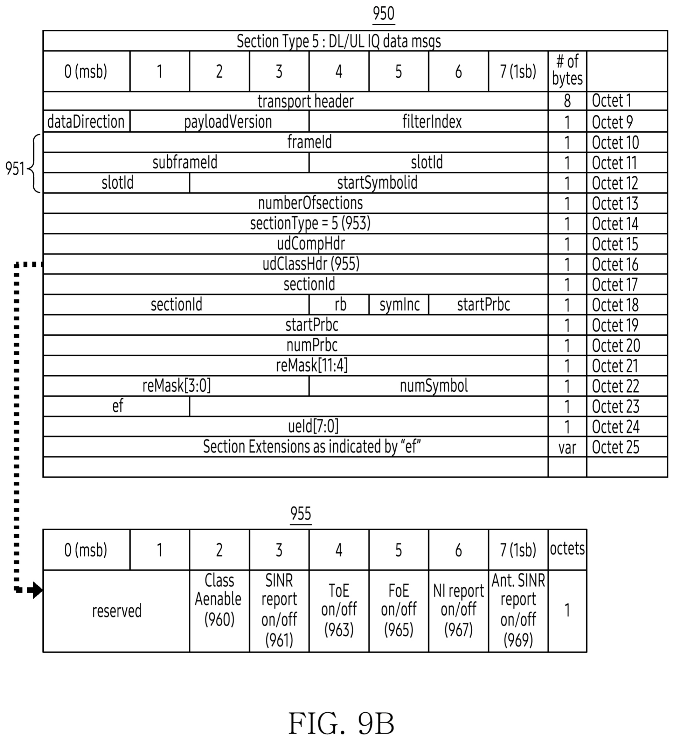

FIG. 9B illustrates an example of a section type for setting up a class.

FIG. 9B illustrates an example of a control plane message 950 for setting up a class A for the RU 220. For example, the RU 220 may support both the class A of FIG. 5A and the class B of FIG. 5B. The class A may be referred to as DMRS beamforming-equalizing (DMRS BF-EQ). The class B may be referred to as DMRS beamforming-non-equalizing (DMRS BF-NEQ). The RU 220 may perform the DMRS processing based on the class A indicated by the control plane message 950. Referring to FIG. 5A, the RU 220, which is the class A, may perform the equalizing 528, and transmit the signal $y_{eq}$ on which the equalizing 528 has been performed to the DU 210 through the uplink message. Since the equalizing 528 has already been performed on the signal $y_{eq}$, it may be difficult for the DU 210 to identify performance information that may be obtained based on DMRS based on the signal $y_{eq}$. Accordingly, in a case of setting up the class A with respect to the RU 220 based on the control plane message 950, the DU 210 may indicate the RU 220 to report requesting information 955. For example, the control plane message 950 may be associated with a designated section type (e.g., section type 5). For example, a section type indicator 953 of the control plane message 950 may indicate the designated section type. For example, the control plane message 950 may include time header information 951 and the section type indicator 953. The time header information 951 may indicate a time resource associated with the control plane message 950. The section type indicator 953 may indicate a section type associated with the control plane message 950.

Referring to FIG. 9B, the DU 210 may transmit (or provide) the control plane message 950 associated with the designated section type to the RU 220. For example, the control plane message 950 may include the report requesting information 955.

According to an embodiment, the report requesting information 955 may include a class A setting 960, a signal to interference and noise ratio (SINR) reporting setting 961, a timing offset estimation (ToE) reporting setting 963, a frequency offset estimation (FoE) reporting setting 965, a noise and interference (NI) reporting setting 967, or an antenna SINR reporting setting 969.

For example, the class A setting 960 may indicate whether to set up the class A of the RU 220. For example, the class A setting 960 may have a field length of 1 bit. For example, in a case that the class A setting 960 is 0, the RU 220 may operate based on the class B. For example, in a case that the class A setting 960 is 1, the RU 220 may operate based on the class A. For example, in a case that the class A setting 960 is 1, the RU 220 may identify settings in the report requesting information 955 as valid.

For example, the SINR reporting setting 961 may indicate the DU 210 to request the RU 220 to report the SINR. For example, the SINR reporting setting 961 may have a field length of 1 bit. For example, in a case that the SINR reporting setting 961 is 0, the RU 220 may not perform reporting of the SINR. For example, in a case that the SINR reporting setting 961 is 1, the RU 220 may perform the reporting of the SINR. For example, the SINR may indicate an SINR value for a resource block (RB) of a received DMRS.

For example, the ToE reporting setting 963 may indicate the DU 210 to request the RU 220 to report the ToE. For example, the ToE reporting setting 963 may have a field length of 1 bit. For example, in a case that the ToE reporting setting 963 is 0, the RU 220 may not perform reporting of the ToE. For example, in a case that the ToE reporting setting 963 is 1, the RU 220 may perform the reporting of the ToE.

For example, the FoE reporting setting 965 may indicate the DU 210 to request the RU 220 to report the FoE. For example, the FoE reporting setting 965 may have a field length of 1 bit. For example, in a case that the FoE reporting setting 965 is 0, the RU 220 may not perform reporting of the FoE. For example, in a case that the FoE reporting setting 965 is 1, the RU 220 may perform the reporting of the FoE.

For example, the NI reporting setting 967 may indicate the DU 210 to request the RU 220 to report the NI. For example, the NI reporting setting 967 may have a field length of 1 bit. For example, in a case that the NI reporting setting 967 is 0, the RU 220 may not perform reporting of the NI. For example, in a case that the NI reporting setting 967 is 1, the RU 220 may perform the reporting of the NI.

For example, the antenna SINR reporting setting 969 may indicate the DU 210 to request the RU 220 to report the antenna SINR. For example, the antenna SINR reporting setting 969 may have a field length of 1 bit. For example, in a case that the antenna SINR reporting setting 969 is 0, the RU 220 may not perform reporting of the antenna SINR. For example, in a case that the antenna SINR report setting 969 is 1, the RU 220 may perform the reporting of the antenna SINR. For example, the antenna SINR may represent an SINR value for an antenna port of the received DMRS.

Referring to the above, in a case that the control plane message 950 received from the DU 210 includes the report requesting information 955, the RU 220 may identify that it is set to one of the class A and the class B based on the class A setting 960. In addition, in a case that the class A setting 960 indicates 1, the RU 220 may identify information to be reported to the DU 210 based on the report requesting information 961, 963, 965, 967, and 969.

The section type 950 of FIG. 9B is only exemplary, and the embodiment of the present disclosure is not limited thereto. For example, positions and lengths of parameters in the section type 950 may be changed.

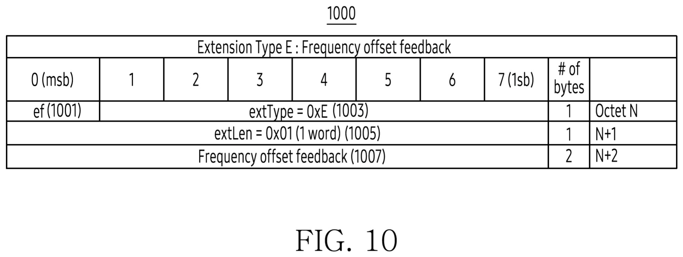

FIG. 10 illustrates an example of an extension type for providing frequency offset (FO) feedback information.

FIG. 10 illustrates an example of an extension type 1000 for providing the FO feedback information. Referring to FIG. 10, the extension type 1000 for providing the FO feedback information may include prior FO feedback information. The extension type 1000 may be referred to as extension type information or section extension (SE).

According to an embodiment, the extension type 1000 may include a common parameter. For example, the common parameter may include an extension flag (ef) 1001, an extension type (extType) 1003, and an extension length (extLen) 1005.

For example, the ef 1001 may be used to indicate whether there is another extension type following the extension type 1000. For example, the ef 1001 may have a field length of 1 bit. For example, in a case that a value of the ef 1001 is 1, the other extension type may exist. Alternatively, in a case that the value of the ef 1001 is 0, the other extension type may not exist. The ef 1001 may be referred to as an extension flag.

For example, the extType 1003 may be used to indicate the extension type 1000. For example, the extType 1003 may provide an extension type that provides specific additional parameters to a subject data extension. For example, the extType 1003 may have a field length of 7 bits. For example, the extType 1003 may have different values for each extension type. For example, the extType 1003 of the extension type 1000 for the DMRS processing may include 0xE. The E may represent an arbitrary order or number. The E may represent a number of two or more digits (e.g., 29). The extension type 1000 in which the extension type 1003 is the E may be referred to as an extension type E. The extType 1003 may be referred to as an index of the extension type information.

For example, the extLen 1005 may provide a length of the extension type 1000. For example, the extLen 1005 may provide the length of the extension type 1000 in units of 32 bits (or 4 bytes) words. For example, the extLen 1005 may have a field length of 8 bits. However, an embodiment of the present disclosure is not limited thereto. For example, according to information included in the extension type 1000, the extLen 1005 may have a field length of 16 bits or more. The extLen 1005 may be referred to as a length of the extension type information. For example, the extension type 1000 may have a length of 8 bytes indicated by the extLen 1005.

According to an embodiment, the extension type 1000 may include FO feedback information 1007. For example, the FO feedback information 1007 may indicate the prior FO feedback information. For example, the FO feedback information 1007 may have a field length of 16 bits. For example, the FoE 1007 may have a unit of Hertz (Hz).

For example, in a case that DMRS (or uplink DMRS) to be received is a specific setting, the FO feedback information 1007 may be provided to RU 220. For example, the RU 220 may not identify an FO value based on the DMRS in the specific setting. For example, the specific setting may include a case where a terminal 120 associated with the DMRS has only one DMRS set in PUSCH transmission. Setting only the one DMRS may be identified based on a length of a symbol indicated through a control plane message and DMRS information (e.g., the extension type 600 of FIG. 6A, the extension type 650 of FIG. 6B, the extension type 700 of FIG. 7B, the extension type 720 of FIG. 7C, or other information for setting the DMRS).

In a case that only the one DMRS is included in the PUSCH transmission, the RU 220 may not identify the FO value. Therefore, DU 210 may provide the prior FO feedback information to the RU 220 based on the extension type 1000. For example, the DU 210 may transmit (or provide) the control plane message including information on the extension type 1000 to the RU 220. Accordingly, the RU 220 may identify the FO value based on the control plane message (or the extension type 1000). For example, the RU 220 may receive an uplink signal including the DMRS from the terminal 120 based on the FO value. For example, the RU 220 may be associated with a class A or a class B.

The extension type 1000 of FIG. 10 is only exemplary, and the embodiment of the present disclosure is not limited thereto. For example, positions and lengths of parameters in the extension type 1000 may be changed.

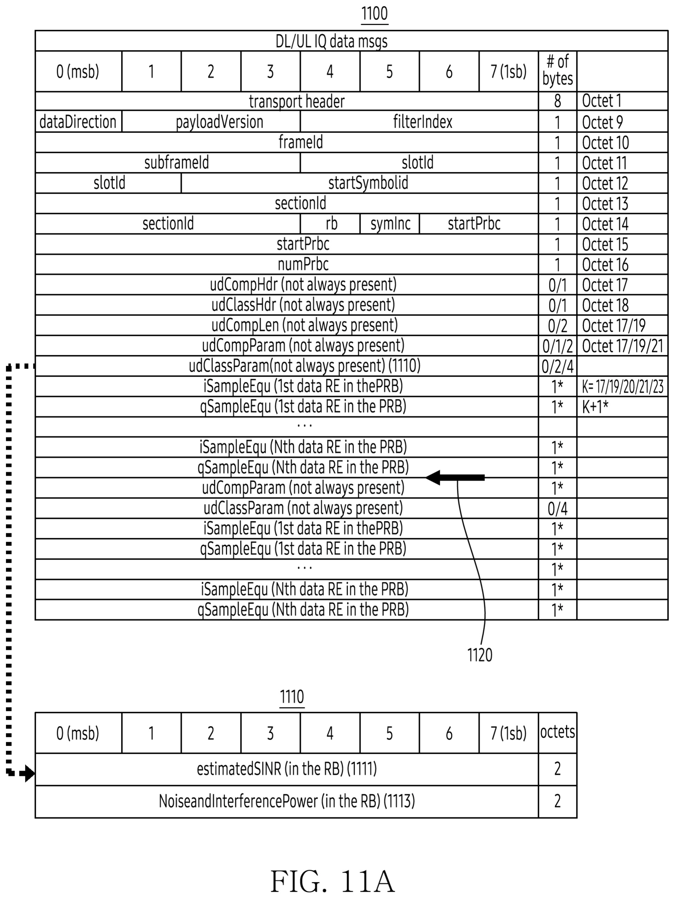

FIG. 11A illustrates an example of a user plane message including reporting information.

FIG. 11A illustrates an example of a user plane message 1100 including the reporting information of the DMRS processing. For example, the user plane message 1100 may be included in an uplink message that which RU 220 transmits to DU 210. For example, the RU 220 may perform the DMRS processing on a received DMRS and generate reporting information 1110 identified based on the DMRS processing. For example, after receiving the extension type 900 for setting up the class A of FIG. 9A or the control plane message 950 of FIG. 9B, the RU 220 may generate the reporting information 1110 based on report requesting information indicated by the extension type 900 or the control plane message 950. For example, the RU 220 may transmit (or provide) the user plane message 1100 including the generated reporting information 1110 to the DU 210.

Referring to FIG. 11A, the user plane message 1100 may include the reporting information 1110. For example, the reporting information 1110 included in the user plane message 1100 may include an estimated SINR 1111 and NI power 1113. When transmitted from the RU 220 to the DU 210, the user plane message 1100 may be transmitted in units of symbols rather than in units of UE. Accordingly, report requesting information (e.g., ToE, FoE, and antenna SINR) defined for each UE unit may not be included in the reporting information 1110 of the user plane message 1100.

For example, the estimated SINR 1111 may indicate an SINR value in RB. For example, the estimated SINR 1111 may have a field length of 16 bits. For example, a unit of the estimated SINR 1111 may be 1/29, and a range of the estimated SINR 1111 may have a value between - 64dB and 64dB.

For example, the NI power 1113 may indicate an NI power value in the RB. For example, the NI power 1113 may have a field length of 16 bits. For example, the NI power 1113 may be defined as in the following equation.

【Equation 1】

$$10\log 10(P_{NI} * 12) - 152dBm$$

The $P_{NI}$ may represent a value indicated by the NI power 1113, and the 12 and 152 dBm multiplied by the $P_{NI}$ may represent an arbitrary value. For example, the arbitrary value may be changed.

Referring to the above, the RU 220 may generate the user plane message 1100 including the reporting information 1110 and transmit (or provide) the generated user plane message 1100 to the DU 210. Accordingly, the DU 210 may perform layer demapping and modulation/decoding based on the reporting information 1110 generated by the RU 220, which is the class A.

The user plane message 1100 of FIG. 11A is only exemplary, and an embodiment of the present disclosure is not limited thereto. For example, positions and lengths of parameters in the user plane message 1100 may be changed. According to an embodiment, the reporting information 1110 may be included in a position 1120 of the user plane message 1100 after IQ data (iSampleEqu (Nst data RE in the PRB) and qSampleEqu (Nst data RE in the PRB)). In other words, the user plane message 1100 of FIG. 11A an example sequentially including udCompParam, the reporting information (udClassParam) 1100, and IQ data (1st data to Nth data), and including udCompParam, udClassParam, and IQ data (1st data to Nth data) is illustrated, but the embodiment of the present disclosure is not limited thereto. The user plane message 1100 may include IQ data consecutive to the udCompParam and the reporting information 1100 consecutive to the IQ data at a position 1120, and may also include another udCompParam consecutive to the reporting information 1100.

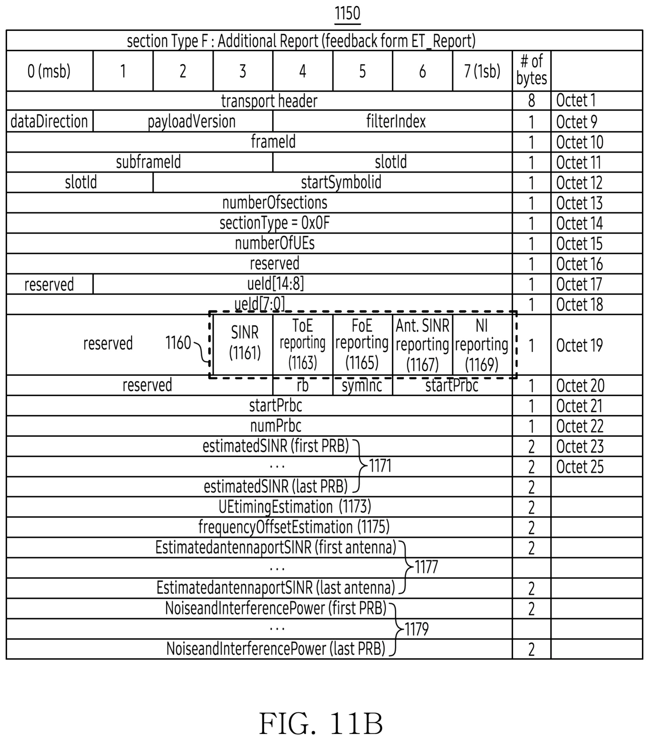

FIG. 11B illustrates an example of a control plane message including reporting information.

FIG. 11B illustrates an example of a control plane message 1150 including the reporting information of the DMRS processing. For example, the control plane message 1150 may be included in an uplink message that RU 220 transmits to DU 210. For example, the RU 220 may perform the DMRS processing on a received DMRS and generate identified reporting information 1160, based on the DMRS processing. For example, after receiving the extension type 900 for setting up the class A of FIG. 9A or the control plane message 950 of FIG. 9B, the RU 220 may generate the reporting information 1160 based on report requesting information indicated by the extension type 900 or the control plane message 950. For example, the RU 220 may transmit (or provide) the control plane message 1150 including the generated reporting information 1160 to the DU 210.

Referring to FIG. 11B, the control plane message 1150 may include the reporting information 1160. For example, the reporting information 1160 included in the control plane message 1150 may include an estimated SINR 1161, ToE 1163, FoE 1165, an estimated antenna SINR 1167, and NI power 1169. The estimated SINR 1161, the ToE 1163, the FoE 1165, the estimated antenna SINR 1167, and the NI power 1169 may be referred to as report objects. For example, the reporting information 1160 may indicate the report objects. For example, each of the report objects in the reporting information 1160 may have a field length of 1 bit. For example, in a case that a value of the report objects is 0, the report objects may not be included in the control plane message 1150. Alternatively, in a case that the value of the report objects is 1, the report objects may be included in the control plane message 1150. Being included in the control plane message 1150 may mean being reported. The control plane message 1150 may be transmitted in units of UE when transmitted from the RU 220 to the DU 210. Accordingly, report requesting information (e.g., ToE, FoE, and antenna SINR) defined for each UE unit and report requesting information (e.g., SINR and NI) defined for each RB unit may be included in the reporting information 1160 of the control plane message 1150. Hereinafter, for convenience of explanation, an example of the control plane message 1150 including all of the report objects (e.g., the estimated SINR 1161, the ToE 1163, the FoE 1165, the estimated antenna SINR 1167, and the NI power 1169) in the reporting information 1160 is described.

For example, each of estimated SINR values 1171 may indicate an SINR value in the RB. For example, the estimated SINR values 1171 may include an estimated SINR value of each of a first PRB to a last PRB. For example, each of the estimated SINR values 1171 may have a field length of 16 bits. For example, a unit of each of the estimated SINR values 1171 may be 1/29, and a range of each of the estimated SINR values 1171 may be between -64dB and 64dB.

For example, ToE 1173 may indicate a UE timing estimation value. For example, the ToE 1173 may have a field length of 16 bits. For example, the ToE 1173 may have a unit corresponding to sample duration. Alternatively, for example, the ToE 1173 may have a unit according to an absolute time length (e.g., nano second (ns)). For example, the ToE 1173 may include a timing offset (TO) value identified based on the DMRS.

For example, FoE 1175 may represent a frequency offset value. For example, the FoE 1175 may have a field length of 16 bits. For example, the FoE 1175 may have a unit of Hertz (Hz). For example, the FoE 1175 may include an FO value identified based on the DMRS.

For example, each of estimated antenna SINR values 1177 may indicate an estimated SINR value for each antenna associated with the DMRS. For example, the estimated antenna SINR values 1177 may include an estimated SINR value of each of a first antenna to a last antenna included in the RU 220. For example, each of the estimated antenna SINR values 1177 may have a field length of 16 bits. For example, a unit of each of the estimated antenna SINR values 1177 may be 1/29, and a range of each of the estimated antenna SINR values 1177 may be between - 64dB and 64dB.

For example, each of NI power values 1179 may indicate an NI power value in the RB. For example, the NI power values 1179 may include an NI power value of each of the first PRB to the last PRB. For example, each of the NI power values 1179 may have a field length of 16 bits. For example, each of the NI power values 1179 may be defined as in the Equation 1.

Referring to the above, the RU 220 may generate the control plane message 1150 including the reporting information 1160, and transmit (or provide) the generated control plane message 1150 to the DU 210. Accordingly, the DU 210 may perform layer demapping and modulation/decoding based on the reporting information 1160 generated by the RU 220, which is the class A.

The control plane message 1150 of FIG. 11B is only exemplary, and the embodiment of the present disclosure is not limited thereto. For example, positions and lengths of parameters in the control plane message 1150 may be changed.

Referring to FIG. 11B, the control plane message 1150 including the reporting information of the DMRS processing may be used to transmit a result of the DMRS processing. For example, the control plane message 1150 may be associated with a specific section type. For example, the specific section type may include a section type F. The F may represent an arbitrary order or number. For example, the F may include 10. In other words, the control plane message 1150 may be associated with the section type F.

According to an embodiment, in a case that the control plane message 1150 is newly defined, a new definition for an endpoint of a section type may be required. For example, the end point may be defined for each channel. For example, the channel may include PRACH, a physical uplink shared channel (PUCSH), a physical uplink control channel (PUCCH), PDSCH, and PDCCH. For example, the end point may indicate a supportable section type (or a supporting section type) for each channel. As described above, in a case that the control plane message 1150 is associated with the section type F, the end point may indicate the section type E.

As described above, the supportable section type may be defined through a user plane configuration module (or YANG module) of a management plane. The module may define the supportable section type as follows.

【Table 1】

```
|   +--ro supported-section-types* [section-type]
|   |   +--ro section-type                        uint8
|   |   +--ro supported-section-extensions*       uint8
```

Referring to the above-described table, in relation to the control plane message 1150, a value (uint8) of a section-type may indicate F (i.e., a section type F). Alternatively, referring to FIGS. 6A to 10, the value (uint8) of the supported-section-extensions may indicate at least one of A, B, C, D, or E. For example, the A may represent an extension type A (e.g., the extension type 600 of FIG. 6A and the extension type 650 of FIG. 6B). For example, the B may represent an extension type B (e.g., the extension type 700 of FIG. 7A, the extension type 720 of FIG. 7B, and the extension type 740 of FIG. 7C). For example, the C may represent an extension type C (e.g., the extension type 800-1 of FIG. 8A, the extension type 800-2 of FIG. 8B, and the extension type 800-3 of FIG. 8C). For example, the D may indicate an extension type D (e.g., the extension type 900 of FIG. 9A). For example, the E may indicate an extension type E (e.g., the extension type 1000 of FIG. 10).

In an example, the section type F may be associated (or merged) with the extension type D (e.g., the extension type 900 of FIG. 9A). Alternatively, for example, the specified section type (e.g., section type 5) may be associated with at least one of the extension type A to the extension type E. However, the embodiment of the present disclosure is not limited thereto.

According to an embodiment, the RU 220 may report capability information to the DU 210 through a management plane message. For example, the capability information may represent capability information for the class A (or DMRS BF-EQ) and the class B (or DMRS BF-NEQ). An example of the management plane message including the capability information is illustrated in the following table.

【Table 2】

```
module: o-ran-module-cap
+--rw module-capability
+--ro ru-capabilities
| +--ro ru-supported-category? Enumeration
| +--ro ru-supported-classes? [class-type]
|  | +--ro class-type? Enumeration
|  | +--ro max-dmrs-layer-per-slot? uint8
|  | +--ro max-dmrs-layer-per-symbol? Uint8
|  | +--ro max-dmrs-layer-per-rbg? uint8
```

```
| | +--ro ru-supported-dimension-reduction? uint8

| | +--ro system-type? Enumeration

| | +--ro dmrs-type (A/B)? Enumeration

| | +--ro dmrs-type (1/2)? Enumeration

| | +--ro 2symbol-dmrs? uint8

| | +--ro low-papr-type1? uint8

| | +--ro low-papr-type2? Uint8

| | +--ro pi2-bpsk? Uint8

| | +--ro group-hopping? Uint8

| | +--ro max-dmrs-scrambling-id-per-slot?
```

For example, the ru-supported-classes may indicate a class supported by the RU 220. For example, the ru-supported-classes may include the class A, the class B, or the class A and the class B.

For example, the max-dmrs-layer-per-slot may indicate a maximum number of dmrs layers for each slot in which the RU 220 may use. The max-dmrs-layer-per-symbol may indicate a maximum number of dmrs layers for each symbol in which the RU 220 may use. The max-dmrs-layer-per-rbg may indicate a maximum number of dmrs layers for each control plane message in which the RU 220 may use.

For example, the ru-supported-dimension-reduction may indicate whether the RU 220 supports dimension reduction. For example, the system-type may indicate whether the RU 220 supports NR or LTE. For example, the system-type may include the NR, the LTE, or the NR and the LTE. For example, the dmrs-type (A/B) may indicate configuration type of DMRS that the RU 220 may support. For example, the dmrs-type (1/2) may indicate a mapping type of the DMRS that the RU 220 may support. For example, the 2symbol-dmrs may indicate whether the RU 220 may support additional position information. For example, the low-papr-type1 may indicate whether RU 220 may support type1 of low-PARR. For example, the low-papr-type2 may indicate whether RU 220 may support type2 of the low-PARR. For example, the pi2-bpsk may indicate whether RU 220 may support $\pi/2$ BPSK. For example, the group-hopping may indicate whether the RU 220 may support group hopping. For example, the max-dmrs-scrambling-id-per-slot may indicate a maximum number of DMRS scrambling IDs (e.g., second scrambling identification information) for each slot that the RU 220 may support.

According to an embodiment, the RU 220 may transmit the management plane message to the DU 210. Information (or a component) included in the management plane message may be changed according to the ru-supported-classes. For example, in a case that the ru-supported-classes indicate the class A, the information included in the management plane message may include a first set. For example, the first set may include the max-dmrs-layer-per-slot indicating that the maximum number of dmrs layers for each slot is 4. Alternatively, in a case that the ru-supported-classes indicate the class B, the information included in the management plane message may include a second set. For example, the second set may include the max-dmrs-layer-per-slot indicating that the maximum number of dmrs layers for each slot is 16. In the above example, an example in which the ru-supported-classes are changed according to the class A and the class B has been described, but the embodiment of the present disclosure is not limited thereto. For example, each of the max-dmrs-layer-per-slot, the max-dmrs-layer-per-rbg, the ru-supported-dimension-reduction, the system-type, the system-type, the dmrs-type (A/B), the dmrs-type (1/2), the 2symbol-dmrs, the low-papr-type1, the low-papr-type2, the pi2-bpsk, the group-hopping, and the max-dmrs-scrambling-id-per-slot, included in the management plane message may be changed according to the ru-supported-classes. However, in an example, at least some components included in the management plane message may be set the same even if a class of RU 220 is changed.

As described above, the RU 220 may provide the capability information to the DU 210 through the management plane message. In an example, the DU 210 may transmit a control plane message to the RU 220 based on the capability information obtained through the management plane message. The control plane message may include the extension type or the control plane message of FIGS. 6A to 9B.

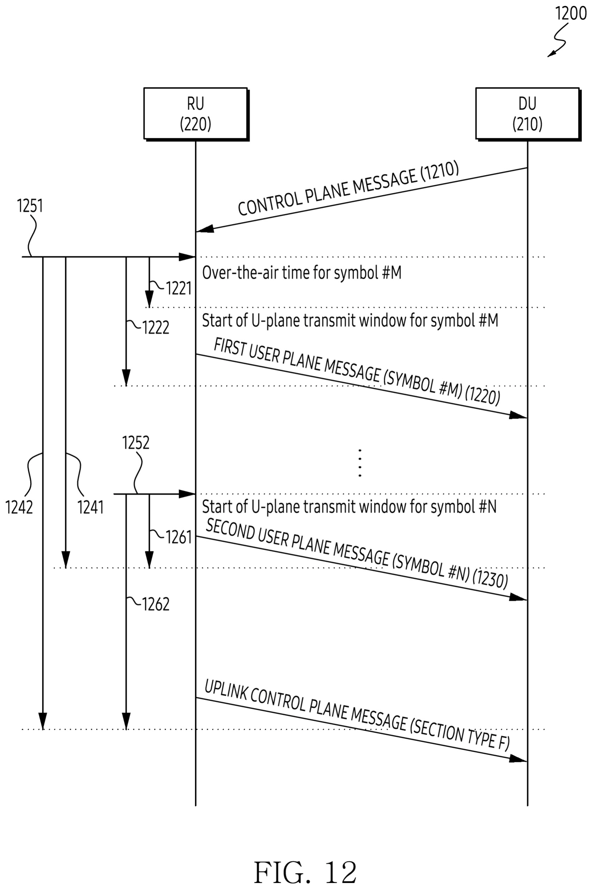

FIG. 12 illustrates an example of a signal flow for transmitting an uplink message.

FIG. 12 illustrates an example 1200 of a signal flow in which DU 210 transmits a control plane message for the DMRS processing to RU 220 and the RU 220 transmits the uplink message to the DU 210.

Referring to the example 1200, in operation 1210, the DU 210 may transmit (or provide) the control plane message to the RU 220. For example, the RU 220 may receive (or obtain) the control plane message from the DU 210. For example, the control plane message may include the extension type 600 of FIG. 6A, the extension type 650 of FIG. 6B, the extension type 700 of FIG. 7A, the extension type 720 of FIG. 7B, the extension type 740 of FIG. 7C, the extension type 800-1 of FIG. 8A, the extension type 800-2 of FIG. 8B, the extension type 800-3 of FIG. 8C, the extension type 900 of FIG. 9A, the control plane message 950 of FIG. 9B, or the extension type 1000 of FIG. 10.

Referring to the example 1200, in operation 1220, the RU 220 may transmit an uplink message to the DU 210. For example, the uplink message may include a first user plane message including a result of the DMRS processing. For example, the first user plane message may be transmitted in a symbol #M. For example, the result may include reporting information. For example, in a case that the control plane message received in the operation 1210 includes the extension type 900 of FIG. 9A or the control plane message 950 of FIG. 9B, the first user plane message may include the user plane message 1100 of FIG. 11A. The result of the DMRS processing may include a result of the RU 220 performing channel estimation and weight calculation on DMRS (or uplink DMRS) of the uplink channel (e.g., PUSCH) received from a terminal. For example, the result of the DMRS processing may include a beamformed signal (e.g., the signal $y_{bf}$ of FIG. 5B) or a signal equalized to the beamformed signal (e.g., the signal $y_{bf}$ of FIG. 5B).

According to an embodiment, the first user plane message may be transmitted based on a first minimum time length Ta3-min 1221 and a first maximum time length Ta3-max 1222. For example, the first user plane message may be transmitted within a first transmission window between the first minimum time length 1221 and the first maximum time length 1222.

Referring to the example 1200, in operation 1230, the RU 220 may transmit an uplink message to the DU 210. For example, the uplink message may include a second user plane message including a result of the DMRS processing. For example, the second user plane message may be transmitted in a symbol #N. For example, the result may include reporting information. For example, in a case that the control plane message received in the operation 1210 includes the extension type 900 of FIG. 9A or the control plane message 950 of FIG. 9B, the second user plane message may include the user plane message 1100 of FIG. 11A. The result of the DMRS processing may include a result of the RU 220 performing channel estimation and weight calculation on DMRS (or uplink DMRS) of the uplink channel (e.g., PUSCH) received from the terminal. For example, the result of the DMRS processing may include the beamformed signal (e.g., the signal $y_{bf}$ of FIG. 5B) or the signal equalized to the beamformed signal (e.g., the signal $y_{bf}$ of FIG. 5B).

Although omitted in FIG. 12, the second user plane message may also be transmitted within a designated transmission window. A length of the designated transmission window may correspond to that of the first transmission window.

Referring to the example 1200, in operation 1240, the RU 220 may transmit an uplink message to the DU 210. For example, the uplink message may include an uplink control plane message including a result of the DMRS processing. For example, in a case that the control plane message received in the operation 1210 includes the extension type 900 of FIG. 9A or the control plane message 950 of FIG. 9B, the uplink control plane message may include the control plane message 1150 of FIG. 11B.

According to an embodiment, the uplink control plane message may be transmitted based on a second minimum time length Ta3-min-seE 1241 and a second maximum time length Ta3-max-seE 1242. For example, the uplink control plane message may be transmitted within a second transmission window between the second minimum time length 1241 and the second maximum time length 1242. According to an embodiment, the second transmission window for the uplink control plane message may be formed longer than the first transmission window for a user plane message (e.g., the first user plane message or the second user plane message).

According to an embodiment, the first minimum time length 1221, the first maximum time length 1222, the second minimum time length 1241, and the second maximum time length 1242 may be set for a first reference time 1251. For example, the first reference time 1251 may represent a start point of the first minimum time length 1221, the first maximum time length 1222, the second minimum time length 1241, and the second maximum time length 1242. According to an embodiment, the first reference time 1251 may be identified based on the control plane message obtained in the operation 1210. For example, the first reference time 1251 may be indicated by a start symbol identifier (ID) for a user plane message. For example, the start symbol may represent the symbol #M. For example, the start symbol identifier may be included in the control plane message obtained in the operation 1210. In this case, the control plane message may include the designated section type and the extension type A to the extension type E. Alternatively, for example, the first reference time 1251 may be indicated as the fastest time when the uplink message is received based on an antenna port of the DU 210. For example, the reference time may be referred to as a reference timing or a reference point.

Alternatively, according to an embodiment, the uplink control plane message may be transmitted based on a third minimum time length Ta3-min-seE 1261 and a third maximum time length Ta3-max-seE 1262. For example, the uplink control plane message may be transmitted within a third transmission window between the third minimum time length 1261 and the third maximum time length 1262. According to an embodiment, the third transmission window for the uplink control plane message may be formed longer than the first transmission window for the user plane message (e.g., the first user plane message or the second user plane message).

According to an embodiment, the third minimum time length 1261 and the third maximum time length 1262 may be set for a second reference time 1252. For example, the second reference time 1252 may represent a start point of the first minimum time length 1221, the first maximum time length 1222, the second minimum time length 1241, and the second maximum time length 1242. According to an embodiment, the second reference time 1252 may be identified based on the control plane message obtained in the operation 1210. For example, the second reference time 1252 may be indicated by a start symbol identifier (ID) for the user plane message. For example, the last symbol may represent the symbol #N. For example, the last symbol identifier may be identified based on the control plane message obtained in the operation 1210. In this case, the control plane message may include the designated section type and the extension type A to the extension type E.

According to an embodiment, the second minimum time length 1241 and the second maximum time length 1242 (or the third minimum time length 1261 and the third maximum time length 1262) may be set through a synchronization plane message. For example, the second minimum time length 1241 and the second maximum time length 1242 (or the third minimum time length 1261 and the third maximum time length 1262) may be set between the DU 210 and the RU 220 through the synchronization plane message. However, the embodiment of the present disclosure is not limited thereto. For example, the second minimum time length 1241 and the second maximum time length 1242 (or the third minimum time length 1261 and the third maximum time length 1262) may be set through a YANG module (e.g., delay-management.yang module) of the management plane message.

Although not illustrated in FIG. 12, the RU 220 may receive an uplink signal from the terminal after the operation 1210 before performing the operation 1220. For example, the uplink signal may include DMRS and/or SRS. The RU 220 may perform the DMRS processing on the uplink signal. However, the embodiment of the present disclosure is not limited thereto. For example, the RU 220 may perform the DMRS processing based on the control plane message received in the operation 1210 for the uplink signal received before the operation 1210.

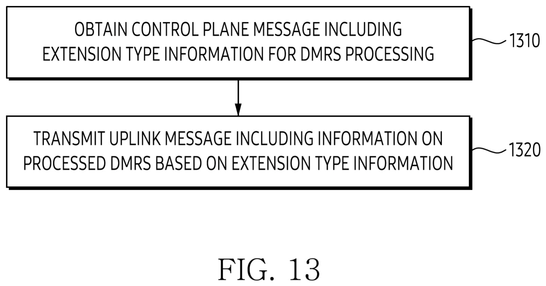

FIG. 13 illustrates an example of an operation flow for a method of reporting information on DMRS based on extension type information for DMRS processing.

At least some of methods of FIG. 13 may be performed by the RU 220 of FIG. 3B. For example, the at least some of the methods may be controlled by the processor 380 of the RU 220. In the following embodiment, each operation may be sequentially performed, but is not necessarily performed sequentially. For example, an order of each operation may be changed, and at least two operations may be performed in parallel.

In operation 1310, the RU 220 may obtain a control plane message including extension type information for the DMRS processing. For example, the RU 220 may receive the control plane message including the extension type information for the DMRS processing from DU 210.

For example, the DMRS processing may represent processing for an uplink DMRS (hereinafter referred to as DMRS). For example, the DU 210 may transmit (or provide) a control plane message including the extension type information to the RU 220. Accordingly, the RU 220 may perform the DMRS processing based on the control plane message (or the extension type information). For example, the RU 220 may receive an uplink signal from a terminal 130. For example, the RU 220 may perform the DMRS processing based on the control plane message (or the extension type information). For example, the RU 220 may be associated with a class A or a class B.

According to an embodiment, the extension type information for the DMRS processing may include information required to perform the DMRS processing. For example, the extension type information may be used in a new radio (NR). For example, the DMRS processed based on the extension type information may be DMRS processed through an NR communication technique.

According to an embodiment, the extension type information may include ef, extType, and extLen. According to an embodiment, the extension type information may include parameters for the DMRS processing. For example, the parameters for the DMRS processing may include waveform information of the DMRS, configuration type information of the DMRS, FDM information of the DMRS, mapping type information of the DMRS, antenna port information for the DMRS, additional position information of the DMRS, and scrambling identification information (e.g., first scrambling identification information and second scrambling identification information) of the DMRS. Specific content associated with this may be substantially the same as the content regarding the parameters included in the extension type 700 of FIG. 7A.

According to an embodiment, in a case that the waveform information of the DMRS indicates DFT-s-OFDM, the extension type information may further include low-PAPR information, a $\pi/2$ BPSK flag, a sequence number, and a group number. In a case that the waveform information of the DMRS indicates the DFT-s-OFDM, content regarding parameters included in the extension type information may be substantially the same as the content regarding the extension type 720 of FIG. 7B.

According to an embodiment, the extension type information may include information indicating the number of at least one terminal associated with multiple ports and a plurality of pieces of DMRS information. Referring to the example of FIG. 7C, the extension type information may include the information indicating the number of the at least one terminal and the plurality of pieces of DMRS information (e.g., the first DMRS information 750 and the second DMRS information 780). A partial of DMRS information (e.g., the second DMRS information 780) may include identification information of a terminal. In this case, the identification information of the terminal of the partial DMRS information may be the same as or different from the terminal associated with other partial DMRS information (e.g., the first DMRS information 750).

For example, in a case that the identification information of the terminal is the same as the terminal associated with the other partial DMRS information (e.g., the first DMRS information 750), the extension type information may be applied to one terminal. According to an embodiment, the extension type information may be concatenated (or merged) with a designated section type and a designated extension type. For example, the designated section type may include a section type 5. For example, the designated extension type may include an extension type 10.

Alternatively, for example, in a case that the identification information of the terminal is different from the terminal associated with the other partial DMRS information (e.g., the first DMRS information 750), the extension type information may be applied to a plurality of terminals. According to an embodiment, the extension type information may be concatenated (or merged) with a designated section type and a designated extension type. For example, the designated section type may include the section type 5. For example, the designated extension type may include the extension type 10 and/or an extension type 16.

In the above-described example, the extension type information is illustrated as being associated with the NR, but an embodiment of the present disclosure is not limited thereto. According to an embodiment, the extension type information may be associated with LTE. For example, the extension type information may include the extension type 600 of FIG. 6A or the extension type 650 of FIG. 6B.

According to an embodiment, the control plane message including the extension type information obtained in the operation 1310 may include other extension type information. For example, the other extension type information may include extension type information (e.g., the extension type 800-1 of FIG. 8A, the extension type 800-2 of FIG. 8B, or the extension type 800-3 of FIG. 8C) for the port reduction. Alternatively, for example, the other extension type information may include extension type information (e.g., the extension type 900 of FIG. 9A) for setting a class of the RU 220. Alternatively, for example, the other extension type information may include extension type information (e.g., the extension type 1000 of FIG. 10) for providing prior FO feedback information of the RU 220. Alternatively, according to an embodiment, the control plane message may include a control plane message (e.g., the control plane message 950 of FIG. 9B) including section type information for setting the class of the RU 220.

In operation 1320, the RU 220 may transmit an uplink message including information on the processed DMRS based on the extension type information. For example, the uplink message may include a user plane message or a control plane message. For example, the uplink message may include a signal generated based on the DMRS processing.

According to an embodiment, the uplink message may include reporting information. For example, in a case that the uplink message is the user plane message, the user plane message may include the reporting information including an estimated SINR and NI power. Alternatively, for example, in a case that the uplink message is the control plane message, it may include the reporting information including the estimated SINR, ToE, FoE, an estimated antenna SINR, and the NI power. For example, the reporting information may be generated in response to the extension type information (e.g., the extension type 900 of FIG. 9A) or the control plane message (e.g., the control plane message 950 of FIG. 9B) as described above.

Referring to FIGS. 1 to 13, a device and a method according to embodiments of the present disclosure may define information for RU 220 to perform DMRS processing. Based on the information for the DMRS processing, the RU 220 may effectively perform the DMRS processing. In addition, from a perspective of a system (or a base station) including DU 210 and the RU 220, the RU 220 may improve uplink performance, including a processing speed for an uplink signal, by performing at least some of operations to be processed by the DU 210.

In embodiments, a radio unit (RU) may comprise a transceiver. The RU may comprise a processor. The RU may comprise memory comprising instructions. The instructions, when executed by the processor, may cause the RU to obtain, from a distributed unit (DU), a control plane message including extension type information for demodulation reference signal (DMRS) processing. The instructions, when executed by the processor, may cause the RU to transmit, to the DU, an uplink message including information on DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

According to an embodiment, the instructions, when executed by the processor, may cause the RU to receive signals from a terminal. The instructions, when executed by the processor, may cause the RU to process the signals received from the terminal based on the extension type information to identify the DMRS associated with the terminal.

According to an embodiment, in a case that the waveform information indicates discrete Fourier transform-spread-orthogonal frequency division multiplexing (DFT-s OFDM), the extension type information may further include low peak to average power ratio (PAPR) information, a binary phase-shift keying (BPSK) flag, a group number, and a sequence number.

According to an embodiment, the control plane message may further include extension type information for setting multiple ports associated with the extension type information for the DMRS processing. First DMRS information including the waveform information, the mapping type information, the configuration type information, the antenna port information, the additional location information, the FDM information, and the scrambling identification information of the extension type information for the DMRS processing may be related to a first terminal. The extension type information for the DMRS processing may further include information indicating the number of at least one terminal including the first terminal associated with the multiple ports and second DMRS information. The second DMRS information may include waveform information for another DMRS, mapping type information for the another DMRS, configuration type information for the another DMRS, antenna port information for the another DMRS, additional location information of the another DMRS, FDM information of the another DMRS, scramble identification information for the another DMRS, and identification information of a second terminal associated with the another DMRS.

According to an embodiment, the control plane message may be associated with a section type 5. The control plane message may further include extension type information for antenna mapping with the extension type information for the DMRS processing and extension type information for setting the multiple ports.

According to an embodiment, the control plane message may further include extension type information for port reduction. The extension type information for the port reduction may include type information of the port reduction, information indicating the number of reduced ports of the port reduction, and reduction information according to the type information. The type information may indicate one of beam identity (ID)-based pre-reduction, real-time weight-based pre-reduction, or sounding reference signal (SRS)-based pre-reduction.

According to an embodiment, the control plane message may further include extension type information for setting a class of the RU. The extension type information for setting the class may include at least one of a signal to interference and noise ratio (SINR) reporting setting, a timing offset estimation (ToE) reporting setting, a frequency offset estimation (FoE) reporting setting, a noise and interference (NI) reporting setting, or an antenna SINR reporting setting.

According to an embodiment, the control plane message may include header information for setting a class of the RU in a section type associated with the control plane message. The header information for setting the class may include class indication information of the RU, and at least one of a signal to interference and noise ratio (SINR) reporting setting, a timing offset estimation (ToE) reporting setting, a frequency offset estimation (FoE) reporting setting, a noise and interference (NI) reporting setting, or an antenna SINR reporting setting.

According to an embodiment, the uplink message may include an uplink user plane message. The uplink user plane message may include reporting information. The reporting information may include at least one of an estimated SINR or a NI power value.

According to an embodiment, the uplink message may include an uplink user plane message. The uplink user plane message may include reporting information. The reporting information may include at least one of an estimated SINR, a UE timing estimation value, an FoE value, an estimated antenna port SINR, or a NI power value.

According to an embodiment, the extension type information may include an extension flag, an index of the extension type information, and a length of the extension type information.

According to an embodiment, the instructions, when executed by the processor, may cause the RU to transmit a management plane message including capability information indicating a class supported by the RU, to the DU. The capability information may indicate at least one of a class A or a class B of the RU. In a case that the capability information indicates the class A, the management plane message may include components indicating a capability of the RU for processing the DMRS set to a first set. In a case that the capability information indicates the class B, the management plane message may include components set to a second set different from the first set.

In embodiments, a distributed unit (DU) may comprise a transceiver. The DU may comprise a processor. The DU may comprise memory comprising instructions. The instructions, when executed by the processor, may cause the DU to transmit, to a radio unit (RU), a control plane message including extension type information for demodulation reference signal (DMRS) processing. The instructions, when executed by the processor, may cause the DU to obtain, from the RU, an uplink message including information on DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

In embodiments, a method performed by a radio unit (RU) may comprise obtaining, from a distributed unit (DU), a control plane message including extension type information for demodulation reference signal (DMRS) processing. The method may comprise transmitting, to the DU, an uplink message including information on DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

According to an embodiment, the method may comprise receiving signals from a terminal. The method may comprise processing the signals received from the terminal based on the extension type information to identify the DMRS associated with the terminal.

According to an embodiment, in a case that the waveform information indicates discrete Fourier transform-spread-orthogonal frequency division multiplexing (DFT-s OFDM), the extension type information may further include low peak to average power ratio (PAPR) information, a binary phase-shift keying (BPSK) flag, a group number, and a sequence number.

According to an embodiment, the control plane message may further include extension type information for setting multiple ports associated with the extension type information for the DMRS processing. First DMRS information including the waveform information, the mapping type information, the configuration type information, the antenna port information, the additional location information, the FDM information, and the scrambling identification information of the extension type information for the DMRS processing may be related to a first terminal. The extension type information for the DMRS processing may further include information indicating the number of at least one terminal including the first terminal associated with the multiple ports and second DMRS information. The second DMRS information may include waveform information for another DMRS, mapping type information for the another DMRS, configuration type information for the another DMRS, antenna port information for the another DMRS, additional location information of the another DMRS, FDM information of the another DMRS, scramble identification information for the another DMRS, and identification information of a second terminal associated with the another DMRS.

According to an embodiment, the control plane message may be associated with a section type 5. The control plane message may further include extension type information for antenna mapping with the extension type information for the DMRS processing and extension type information for setting the multiple ports.

In embodiments, a non-transitory computer readable storage media may comprise instructions that, when executed by a processor of a radio unit (RU) comprising a transceiver, cause the RU to obtain, from a distributed unit (DU), a control plane message including extension type information for demodulation reference signal (DMRS) processing. The non-transitory computer readable storage media may comprise instructions that, when executed by the processor, cause the RU to transmit, to the DU, an uplink message including information on a processed DMRS. The DMRS may be identified based on the extension type information for DMRS processing. The extension type information may include waveform information of DMRS, mapping type information of DMRS, configuration type information of DMRS, antenna port information of DMRS, additional position information of DMRS, frequency division multiplexing (FDM) information of DMRS, and scrambling identification information of DMRS.

In embodiments, a radio unit (RU) may comprise a transceiver. The RU may comprise a processor. The RU may comprise memory comprising instructions. The instructions, when executed by the processor, may cause the RU to obtain, from a distributed unit (DU), a control plane message including extension type information for demodulation reference signal (DMRS) processing. The instructions, when executed by the processor, may cause the RU to transmit, to the DU, an uplink message including information on DMRS. The DMRS may be identified based on the extension type information for DMRS processing. The extension type information may include orthogonal cover code (OCC) information of DMRS, a cyclic shift of DMRS, the number of layers of DMRS, a group number of DMRS, a sequence number of DMRS, frequency density information of DMRS, a phase shift of DMRS, and a base sequence of DMRS.

According to an embodiment, the control plane message may further include extension type information for setting multiple ports associated with the extension type information for the DMRS processing. First DMRS information including the OCC information, the cyclic shift, the number of layers, the group number, the sequence number, the frequency density information, the phase shift, and the base sequence of the extension type information for the DMRS processing may be related to a first terminal. The extension type information for the DMRS processing may further include information indicating the number of at least one terminal including the first terminal associated with the multiple ports and second DMRS information. The second DMRS information may include OCC information of another DMRS, cyclic shift of the another DMRS, the number of layers of the another DMRS, a group number of the another DMRS, a sequence number of the another DMRS, frequency density information of the another DMRS, a phase shift of the another DMRS, a base sequence of the another DMRS and identification information of a second terminal associated with the another DMRS.

According to an embodiment, the control plane message may be associated with a section type 5. The control plane message may further include extension type information for antenna mapping with the extension type information for the DMRS processing and extension type information for setting the multiple ports.

In embodiments, a distributed unit (DU) may comprise a transceiver. The DU may comprise a processor. The DU may comprise memory comprising instructions. The instructions, when executed by the processor, may cause the DU to transmit, to a radio unit (RU), a control plane message including extension type information for demodulation reference signal (DMRS) processing. The instructions, when executed by the processor, may cause the DU to obtain, from the RU, an uplink message including information on DMRS. The DMRS may be identified based on the extension type information for DMRS processing. The extension type information may include orthogonal cover code (OCC) information of DMRS, a cyclic shift of DMRS, the number of layers of DMRS, a group number of DMRS, a sequence number of DMRS, frequency density information of DMRS, a phase shift of DMRS, and a base sequence of DMRS.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer’s server, the application store’s server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

**1.** A device of a radio unit (RU) comprising:

a transceiver;
at least one processor comprising processing circuitry; and
memory storing instructions and comprising one or more storage media,
wherein the instructions, when executed by the at least one processor individually or collectively, cause the device to:

obtain, from a distributed unit (DU), a control plane message including extension type information for demodulation reference signal (DMRS) processing, and

transmit, to the DU, an uplink message including information on DMRS, wherein the DMRS is identified based on the extension type information for DMRS processing, and

wherein the extension type information includes waveform information of DMRS, mapping type information of DMRS, configuration type information of DMRS, antenna port information of DMRS, additional position information of DMRS, frequency division multiplexing (FDM) information of DMRS, and scrambling identification information of DMRS.

**2.** The device of claim 1, wherein the instructions, when executed by the at least one processor individually or collectively, cause the device to:

receive signals from a terminal, and

process the signals received from the terminal based on the extension type information to identify the DMRS associated with the terminal.

**3.** The device of claim 1,
wherein, in a case that the waveform information indicates discrete Fourier transform-spread-orthogonal frequency division multiplexing (DFT-s OFDM), the extension type information further includes low peak to average power ratio (PAPR) information, a binary phase-shift keying (BPSK) flag, a group number, and a sequence number.

**4.** The device of claim 1,

wherein the control plane message further includes extension type information for setting multiple ports associated with the extension type information for the DMRS processing,and

wherein first DMRS information including the waveform information, the mapping type information, the configuration type information, the antenna port information, the additional location information, the FDM information, and the scrambling identification information of the extension type information for the DMRS processing is related to a first terminal,

wherein the extension type information for the DMRS processing further includes information indicating the number of at least one terminal including the first terminal associated with the multiple ports and second DMRS information, and

wherein the second DMRS information includes waveform information for another DMRS, mapping type information for the another DMRS, configuration type information for the another DMRS, antenna port information for the another DMRS, additional location information of the another DMRS, FDM information of the another DMRS, scramble identification information for the another DMRS, and identification information of a second terminal associated with the another DMRS.

**5.** The device of claim 4,

wherein the control plane message is associated with a section type 5, and

wherein the control plane message further includes extension type information for antenna mapping with the extension type information for the DMRS processing and extension type information for setting the multiple ports.

**6.** The device of claim 1,

wherein the control plane message further includes extension type information for port reduction, and

wherein the extension type information for the port reduction includes type information of the port reduction, information indicating the number of reduced ports of the port reduction, and reduction information according to the type information, and

wherein the type information indicates one of beam identity (ID)-based pre-reduction, real-time weight-based pre-reduction, or sounding reference signal (SRS)-based pre-reduction.

**7.** The device of claim 1,

wherein the control plane message further includes extension type information for setting a class of the RU, and

wherein the extension type information for setting the class includes at least one of a signal to interference and noise ratio (SINR) reporting setting, a timing offset estimation (ToE) reporting setting, a frequency offset estimation (FoE) reporting setting, a noise and interference (NI) reporting setting, or an antenna SINR reporting setting.

**8.** The device of claim 1,

wherein the control plane message includes header information for setting a class of the RU in a section type associated with the control plane message,
wherein the header information for setting the class includes:

class indication information of the RU, and
at least one of a signal to interference and noise ratio (SINR) reporting configuration, a timing offset estimation (ToE) reporting configuration, a frequency offset estimation (FoE) reporting configuration, a noise and interference (NI) reporting configuration, or an antenna SINR reporting configuration.

**9.** The device of claim 7,

wherein the uplink message includes an uplink user plane message,
wherein the uplink user plane message includes reporting information, and
wherein the reporting information includes at least one of an estimated SINR or a NI power value.

**10.** The device of claim 7,

wherein the uplink message includes an uplink user plane message,
wherein the uplink user plane message includes reporting information, and
wherein the reporting information includes at least one of an estimated SINR, a UE timing estimation value, an FoE value, an estimated antenna port SINR, or a NI power value.

**11.** The device of claim 1,
wherein the extension type information includes an extension flag, an index of the extension type information, and a length of the extension type information.

**12.** The device of claim 1,

wherein the instructions, when executed by the at least one processor individually or collectively, cause the device to transmit a management plane message including capability information indicating a class supported by the RU, to the DU,
wherein the capability information indicates at least one of a class A or a class B of the RU, wherein, in a case that the capability information indicates the class A, the management plane message includes components indicating a capability of the RU for processing the DMRS set to a first set, and
wherein, in a case that the capability information indicates the class B, the management plane message includes components set to a second set different from the first set.

**13.** A device of a distributed unit (DU) comprising:

a transceiver;
at least one processor; and
memory storing instructions and comprising one or more storage media,
wherein the instructions, when executed by the at least one processor individually or collectively, cause the device to:

transmit, to a radio unit (RU), a control plane message including extension type information for demodulation reference signal (DMRS) processing, and
obtain, from the RU, an uplink message including information on DMRS, wherein the DMRS is identified based on the extension type information for DMRS processing, and
wherein the extension type information includes waveform information of DMRS, mapping type information of DMRS, configuration type information of DMRS, antenna port information of DMRS, additional position information of DMRS, frequency division multiplexing (FDM) information of DMRS, and scrambling identification information of DMRS.

**14.** A method performed by a radio unit (RU), the method comprising:

obtaining, from a distributed unit (DU), a control plane message including extension type information for demodulation reference signal (DMRS) processing, and
transmitting, to the DU, an uplink message including information on DMRS, wherein the DMRS is identified based on the extension type information for DMRS processing, and
wherein the extension type information includes waveform information of DMRS, mapping type information of DMRS, configuration type information of DMRS, antenna port information of DMRS, additional position information of DMRS, frequency division multiplexing (FDM) information of DMRS, and scrambling identification information of DMRS.

**15.** A non-transitory computer readable storage media comprising instructions that, when executed by at least one processor of a radio unit (RU) comprising a transceiver individually or collectively, cause the RU to:

obtain, from a distributed unit (DU), a control plane message including extension type information for demodulation reference signal (DMRS) processing, and
transmit, to the DU, an uplink message including information on a processed DMRS, wherein the DMRS is identified based on the extension type information for DMRS processing, and
wherein the extension type information includes waveform information of DMRS, mapping type information of DMRS, configuration type information of DMRS, antenna port information of DMRS, additional position information of DMRS, frequency division multiplexing (FDM) information of DMRS, and scrambling identification information of DMRS.

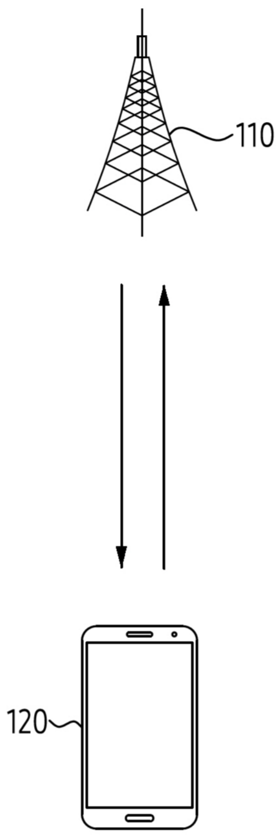


FIG. 1

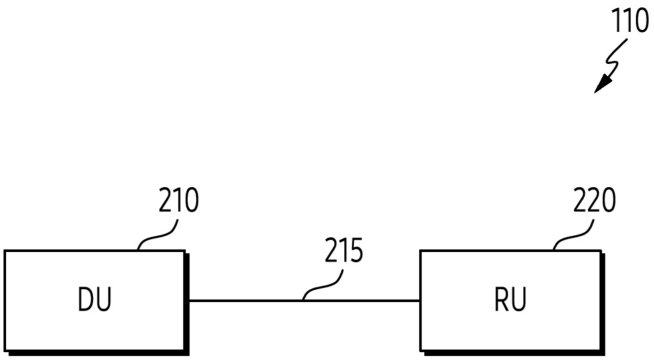


FIG. 2A

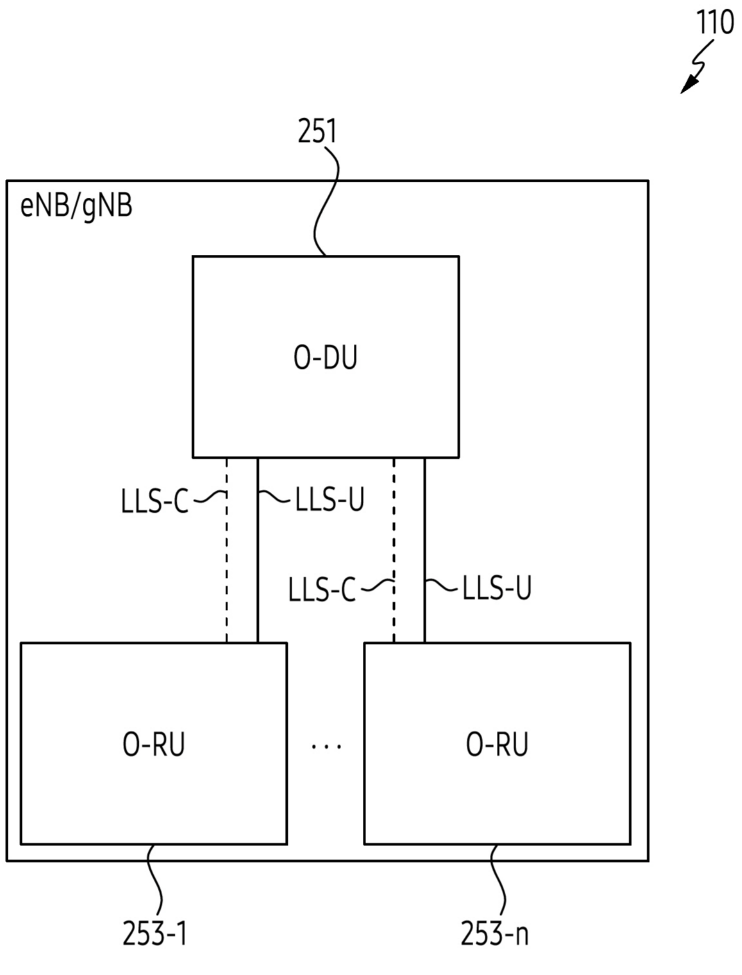


FIG. 2B

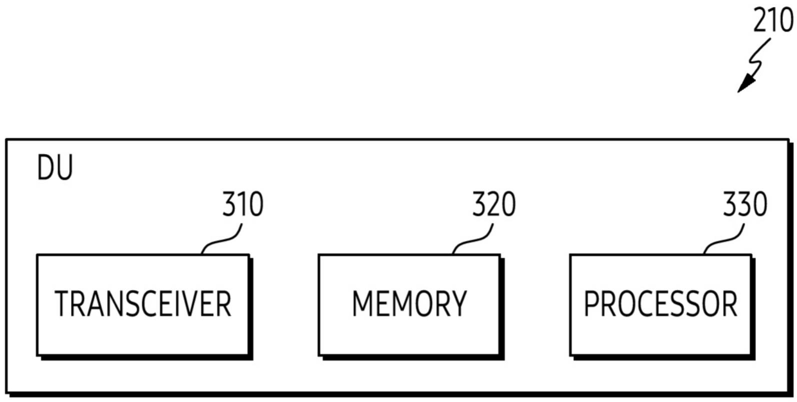


FIG. 3A

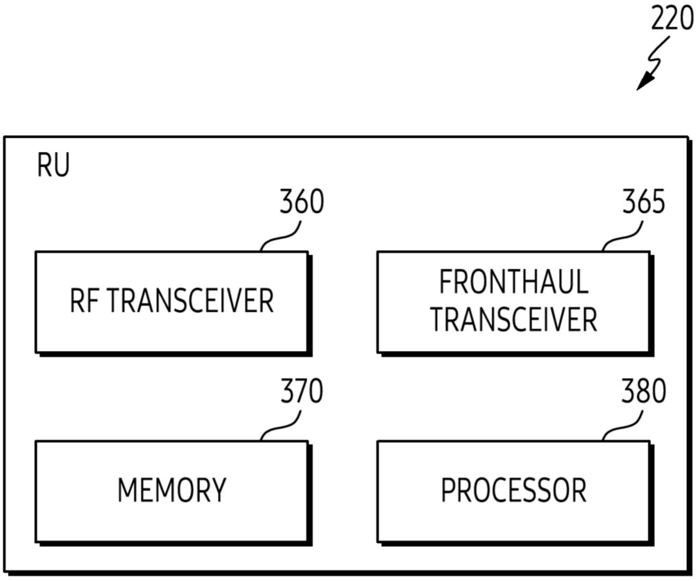
220
RU
360
365
RF TRANSCEIVER
FRONTHAUL TRANSCEIVER
370
380
MEMORY
PROCESSOR

FIG. 3B

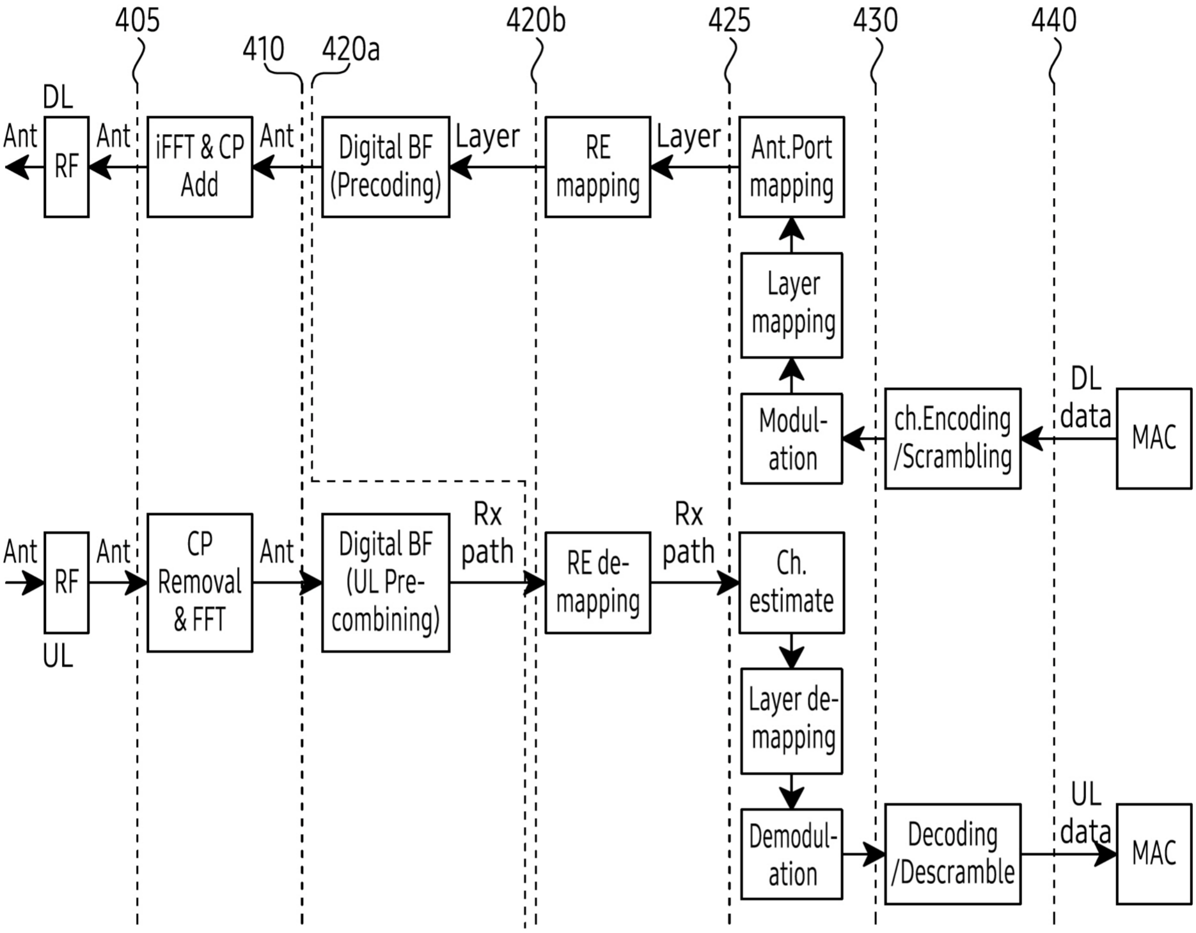
405
410
420a
420b
425
430
440
DL
Ant
RF
Ant
iFFT & CP Add
Ant
Digital BF (Precoding)
Layer
RE mapping
Layer
Ant.Port mapping
Layer mapping
Modul-ation
ch.Encoding /Scrambling
DL data
MAC
Ant
RF
Ant
CP Removal & FFT
Ant
Digital BF (UL Pre-combining)
Rx path
RE de-mapping
Rx path
Ch. estimate
Layer de-mapping
Demodul-ation
Decoding /Descramble
UL data
MAC
UL

FIG. 4

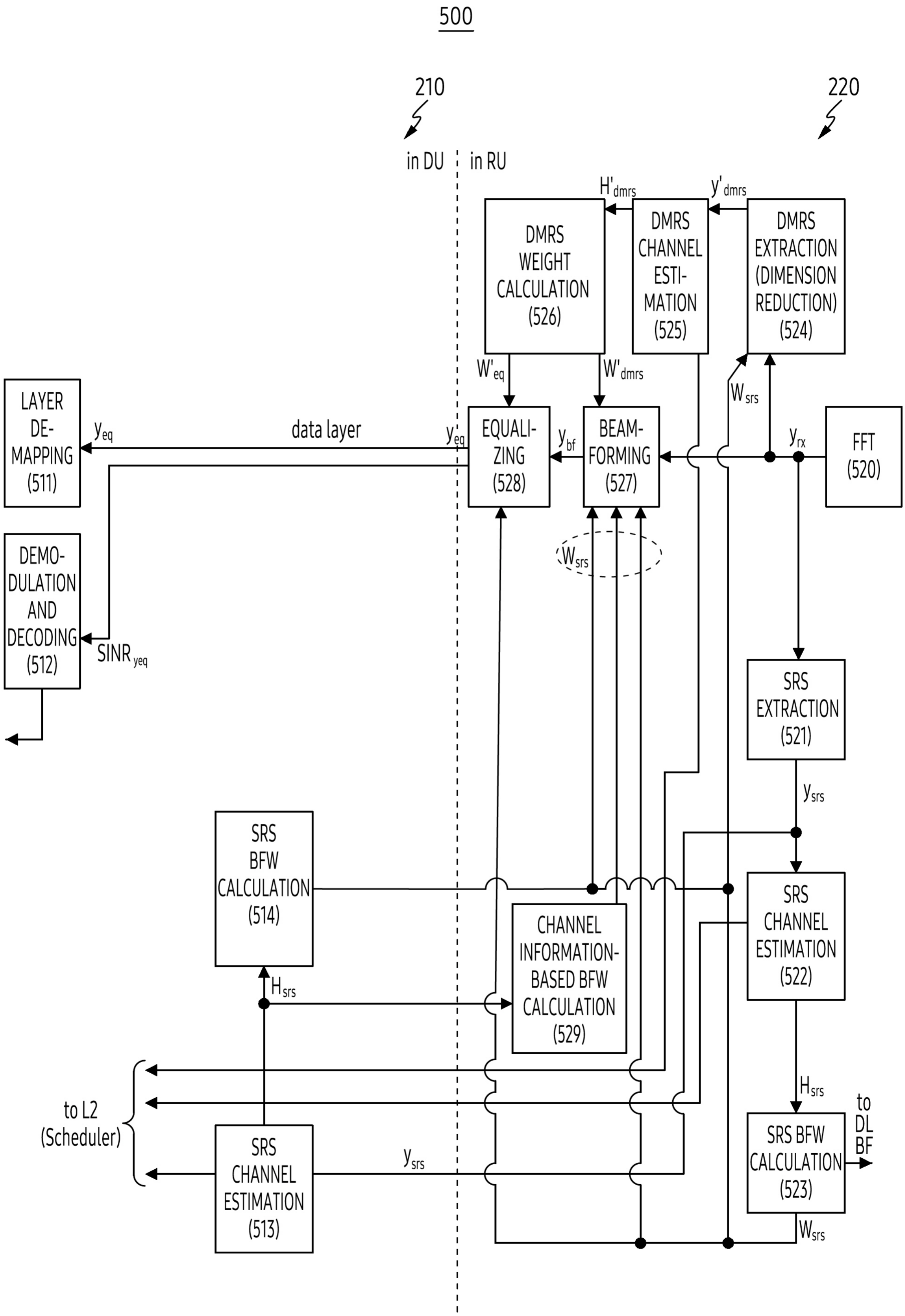
500
210
220
in DU
in RU
H'dmrs
y'dmrs
DMRS WEIGHT CALCULATION (526)
DMRS CHANNEL ESTI-MATION (525)
DMRS EXTRACTION (DIMENSION REDUCTION) (524)
W'eq
W'dmrs
Wsrs
LAYER DE-MAPPING (511)
yeq
data layer
y'eq
EQUALI-ZING (528)
ybf
BEAM-FORMING (527)
yrx
FFT (520)
DEMO-DULATION AND DECODING (512)
SINR yeq
Wsrs
SRS EXTRACTION (521)
ysrs
SRS BFW CALCULATION (514)
CHANNEL INFORMATION-BASED BFW CALCULATION (529)
SRS CHANNEL ESTIMATION (522)
Hsrs
Hsrs
to L2 (Scheduler)
to DL BF
SRS BFW CALCULATION (523)
SRS CHANNEL ESTIMATION (513)
ysrs
Wsrs

FIG. 5A

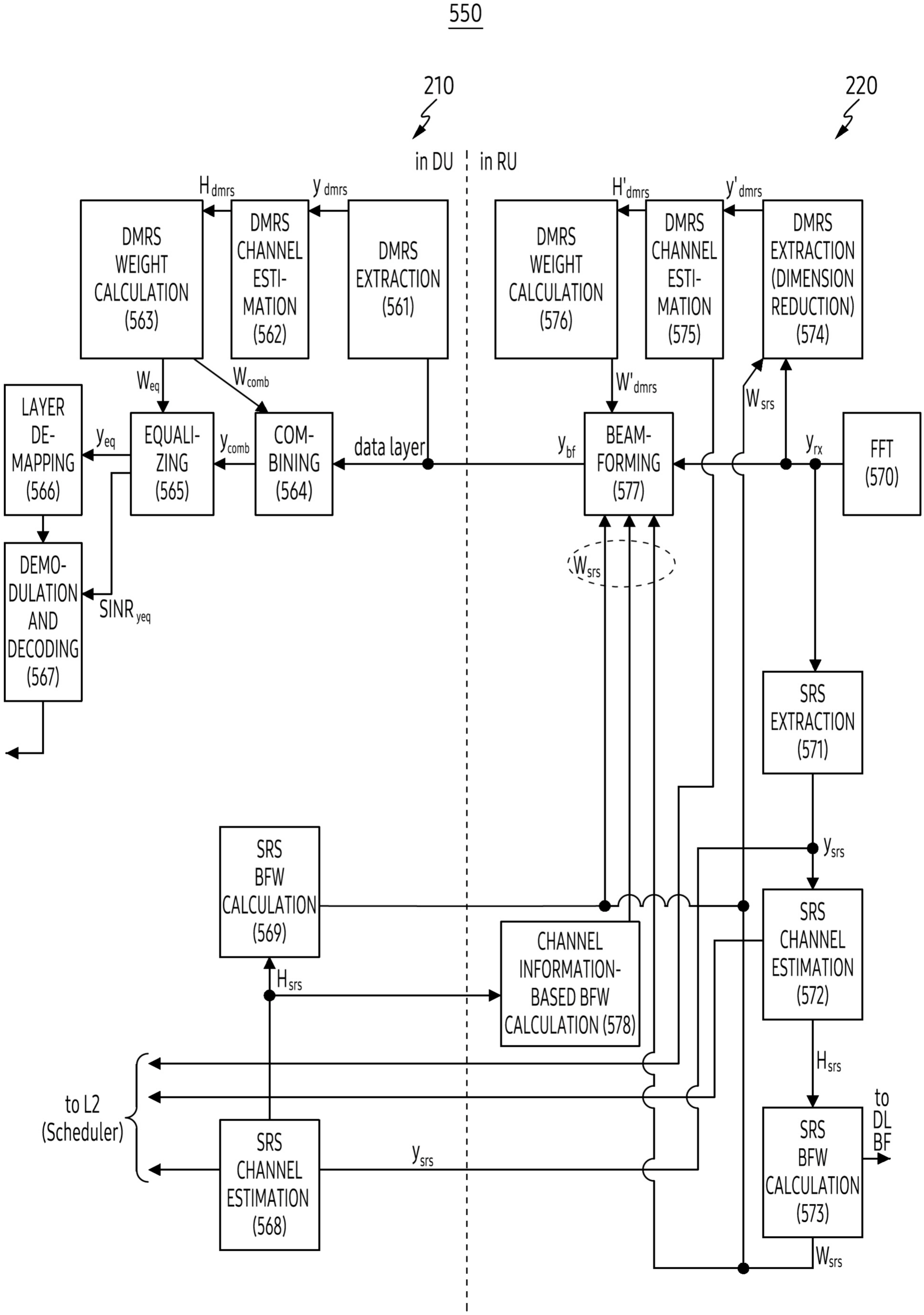
550
210
220
in DU
in RU
$H_{dmrs}$
$y_{dmrs}$
$H'_{dmrs}$
$y'_{dmrs}$
DMRS WEIGHT CALCULATION (563)
DMRS CHANNEL ESTI-MATION (562)
DMRS EXTRACTION (561)
DMRS WEIGHT CALCULATION (576)
DMRS CHANNEL ESTI-MATION (575)
DMRS EXTRACTION (DIMENSION REDUCTION) (574)
$W_{eq}$
$W_{comb}$
$W'_{dmrs}$
$W_{srs}$
LAYER DE-MAPPING (566)
$y_{eq}$
EQUALI-ZING (565)
$y_{comb}$
COM-BINING (564)
data layer
$y_{bf}$
BEAM-FORMING (577)
$y_{rx}$
FFT (570)
DEMO-DULATION AND DECODING (567)
$SINR_{yeq}$
$W_{srs}$
SRS EXTRACTION (571)
$y_{srs}$
SRS BFW CALCULATION (569)
SRS CHANNEL ESTIMATION (572)
$H_{srs}$
CHANNEL INFORMATION-BASED BFW CALCULATION (578)
$H_{srs}$
to L2 (Scheduler)
SRS CHANNEL ESTIMATION (568)
$y_{srs}$
SRS BFW CALCULATION (573)
to DL BF
$W_{srs}$

FIG. 5B

600

| Extension Type A : DMRS information (LTE) | | | | | | | | | |
|---|---|---|---|---|---|---|---|---|---|
| 0 (msb) | 1 | 2 | 3 | 4 | 5 | 6 | 7 (1sb) | # of bytes | |
| ef (601) | extType = 0xA (603) | | | | | | | 1 | Octet N |
| extLen (605) | | | | | | | | 1 | N+1 |
| OCC (607) | Cyclic shift (609) | | | | layer ( λ ) (611) | | | 1 | N+3 |
| group number ( μ ) (613) | | | | | Sequence number (ν) (615) | frequency division (δ) (617) | phase shift (ω) (619) | 1 | N+4 |
| π/2-BPSK flag (621) | $c_{init}$ [30:24] | | | | | | | 1 | N+5 |
| $c_{init}$ [23:16] | | | | | | | | 1 | N+6 |
| $c_{init}$ [15:8] (623: $c_{init}$ [30:24] – $c_{init}$ [7:0]) | | | | | | | | 1 | N+7 |
| $c_{init}$ [7:0] | | | | | | | | 1 | N+8 |
| ···· (600a) | | | | | | | | var | |

FIG. 6A

650

Extension Type A : DMRS information (LTE)

| 0 (msb) | 1 | 2 | 3 | 4 | 5 | 6 | 7 (1sb) | # of bytes | | |
|---|---|---|---|---|---|---|---|---|---|---|
| ef (651) | extType = 0xA (653) | | | | | | | 1 | Octet N | |
| extLen (655) | | | | | | | | 1 | N+1 | |
| reserved | | | | numlayer (657) | | | | 1 | N+2 | |
| OCC (661) | Cyclic shift (663) | | | | layer (λ) (665) | | | 1 | N+3 | 660 |
| group number (μ) (667) | | | | | Sequence number (v) (669) | frequency division (v) (671) | phase shift (ω) (673) | 1 | N+4 | 660 |
| π/2-BPSK flag (675) | $c_{init}$ [30:24] | | | | | | | 1 | N+5 | 660, 677 |
| $c_{init}$ [23:16] | | | | | | | | 1 | N+6 | 660, 677 |
| $c_{init}$ [15:8] | | | | | | | | 1 | N+7 | 660, 677 |
| $c_{init}$ [7:0] | | | | | | | | 1 | N+8 | 660, 677 |
| reserved | ueId[14:8] | | | | | | | 1 | N+9 | 680, 681 |
| ueId[7:0] | | | | | | | | 1 | N+10 | 680, 681 |
| OCC (683) | Cyclic shift (685) | | | | layer (λ) (687) | | | 1 | N+11 | 680 |
| group number (μ) (689) | | | | | Sequence number (v) (691) | frequency division (v) (693) | phase shift (ω) (695) | 1 | N+12 | 680 |
| π/2-BPSK flag (697) | $c_{init}$ [30:24] | | | | | | | 1 | N+13 | 680, 699 |
| $c_{init}$ [23:16] | | | | | | | | 1 | N+14 | 680, 699 |
| $c_{init}$ [15:8] | | | | | | | | 1 | N+15 | 680, 699 |
| $c_{init}$ [7:0] | | | | | | | | 1 | N+16 | 680, 699 |
| ···· (650a) | | | | | | | | var | | |

FIG. 6B

700

<table>
<tr><td colspan="10">Extension Type B : DMRS information (NR + CP-OFDM)</td></tr>
<tr><td>0 (msb)</td><td>1</td><td>2</td><td>3</td><td>4</td><td>5</td><td>6</td><td>7 (1sb)</td><td># of bytes</td><td></td></tr>
<tr><td>ef (701)</td><td colspan="7">extType = 0xB (702)</td><td>1</td><td>Octet N</td></tr>
<tr><td colspan="8">extLen (703)</td><td>1</td><td>N+1</td></tr>
<tr><td colspan="2">reserved</td><td>precoding = 0 (704)</td><td>DMRS type 1, 2 (705)</td><td colspan="2">FDM information (CDM occupation) (706)</td><td colspan="2">DMRS type A (2,3) B (707)</td><td>1</td><td>N+2</td></tr>
<tr><td colspan="5">DmrsPort information (DMRS port + length) (708)</td><td colspan="2">Additional Position (709)</td><td>UL-DMRS -Scrambling -ID (710)</td><td>2</td><td>N+3</td></tr>
<tr><td colspan="8">DMRS-Scrambling-ID (711)</td><td>1</td><td>N+5</td></tr>
<tr><td colspan="8">···· (700a)</td><td>var</td><td></td></tr>
</table>

FIG. 7A

720

<table>
<tr><td colspan="10">Extension Type B : DMRS information (NR + DFT-s-OFDM)</td></tr>
<tr><td>0 (msb)</td><td>1</td><td>2</td><td>3</td><td>4</td><td>5</td><td>6</td><td>7 (1sb)</td><td># of bytes</td><td></td></tr>
<tr><td>ef (721)</td><td colspan="7">extType = 0xB (722)</td><td>1</td><td>Octet N</td></tr>
<tr><td colspan="8">extLen (723)</td><td>1</td><td>N+1</td></tr>
<tr><td colspan="2">reserved</td><td>precoding = 1 (724)</td><td>DMRS type 1, 2 (725)</td><td colspan="2">FDM information (CDM occupation) (726)</td><td colspan="2">DMRS type A (2,3) B (727)</td><td>1</td><td>N+2</td></tr>
<tr><td colspan="5">DmrsPort information (DMRS port + length) (729)</td><td colspan="2">Additional Position (730)</td><td>UL-DMRS -Scrambling -ID (731)</td><td>1</td><td>N+3</td></tr>
<tr><td colspan="8">DMRS-Scrambling-ID (732)</td><td>2</td><td>N+4</td></tr>
<tr><td colspan="2">low-PAPR type (733)</td><td>Sequence number (v) (734)</td><td colspan="5">group number (μ) (735)</td><td>1</td><td>N+6</td></tr>
<tr><td colspan="8">···· (720a)</td><td>var</td><td></td></tr>
</table>

FIG. 7B

740

<table>
<tr><td colspan="10">Extension Type B : DMRS information</td><td></td></tr>
<tr><td>0 (msb)</td><td>1</td><td>2</td><td>3</td><td>4</td><td>5</td><td>6</td><td>7 (1sb)</td><td># of bytes</td><td></td><td></td></tr>
<tr><td>ef (741)</td><td colspan="7">extType = 0xB (742)</td><td>1</td><td>Octet N</td><td></td></tr>
<tr><td colspan="8">extLen (743)</td><td>1</td><td>N+1</td><td></td></tr>
<tr><td colspan="4">reserved</td><td colspan="4">numLayer (744)</td><td>1</td><td>N+2</td><td></td></tr>
<tr><td colspan="2">reserved</td><td>precoding = 0 (751)</td><td>DMRS type 1, 2 (752)</td><td colspan="2">FDM information (CDM occupation) (753)</td><td colspan="2">DMRS type A (2,3) B (754)</td><td>1</td><td>N+3</td><td rowspan="3">750</td></tr>
<tr><td colspan="5">DmrsPort information (DMRS port + length) (755)</td><td colspan="2">Additional Position (756)</td><td>UL-DMRS -Scrambling -ID (757)</td><td>1</td><td>N+4</td></tr>
<tr><td colspan="8">DMRS-Scrambling-ID (758)</td><td>2</td><td>N+5</td></tr>
<tr><td colspan="8">reserved</td><td>1</td><td>N+7</td><td></td></tr>
<tr><td>reserved</td><td colspan="7">ueId[14:8]</td><td>1</td><td>N+8</td><td rowspan="6">780</td></tr>
<tr><td colspan="8">ueId[7:0] 781</td><td>1</td><td>N+9</td></tr>
<tr><td colspan="2">reserved</td><td>precoding = 1 (782)</td><td>DMRS type 1, 2 (783)</td><td colspan="2">FDM information (CDM occupation) (784)</td><td colspan="2">DMRS type A (2,3) B (785)</td><td>1</td><td>N+10</td></tr>
<tr><td colspan="5">DmrsPort information (DMRS port + length) (787)</td><td colspan="2">Additional Position (788)</td><td>UL-DMRS -Scrambling -ID (789)</td><td>1</td><td>N+11</td></tr>
<tr><td colspan="8">DMRS-Scrambling-ID (790)</td><td>2</td><td>N+12</td></tr>
<tr><td colspan="2">low-PAPR type (791)</td><td>Sequence number (v) (792)</td><td colspan="5">group number (μ) (793)</td><td>2</td><td>N+14</td></tr>
<tr><td colspan="8">···· (740a)</td><td>var</td><td></td><td></td></tr>
</table>

FIG. 7C

800-1

| Extension Type C : Port Reduction (beamid based pre reduction) | | | | | | | | | |
|---|---|---|---|---|---|---|---|---|---|
| 0 (msb) | 1 | 2 | 3 | 4 | 5 | 6 | 7 (1sb) | # of bytes | |
| ef (801) | extType = 0xC (803) | | | | | | | 1 | Octet N |
| extLen (805) | | | | | | | | 1 | N+1 |
| PortReductionType = 00 (807) | | numPortReduction (809) | | | | | | 1 | N+2 |
| reserved | 1st Reduction port beamID[14:8] (810) | | | | | | | 1 | N+3 |
| 1st Reduction port beamID[7:0] (810) | | | | | | | | 1 | N+4 |
| ... | | | | | | | | | |
| reserved | numPortReduction-th Reduction port beamID[14:8] (820) | | | | | | | 1 | |
| numPortReduction-th Reduction port beamID [7:0] (820) | | | | | | | | 1 | |
| .... (800a) | | | | | | | | var | |

FIG. 8A

800-2

| Extension Type C :Port Reduction (real-time weight based pre reduction) | | | | | | | | | |
|---|---|---|---|---|---|---|---|---|---|
| 0 (msb) | 1 | 2 | 3 | 4 | 5 | 6 | 7 (lsb) | # of bytes | |
| ef (801) | extType = 0xC (803) | | | | | | | 1 | Octet N |
| extLen (805) | | | | | | | | 1 | N+1 |
| PortReductionType = 01 (807) | | numPortReduction (809) | | | | | | 1 | N+2 |
| bfwCompHdr (831) | | | | | | | | 1 | N+3 |
| bfwCompParam (833) | | | | | | | | var | |
| bfwI (for 1TRX to 1st Reduction port) (835) | | | | | | | | var | |
| bfwQ (for 1TRX to 1st Reduction port) (837) | | | | | | | | var | |
| remaining beamforming weights bfwI and bfwQ up to K TRX to numPortReduction Reduction port (839) | | | | | | | | var | |
| zero pad to 4-byte boundary | | | | | | | | var | |

FIG. 8B

800-3

| Extension Type C : Port Reduction (SRS based pre reduction) | | | | | | | | | |
|---|---|---|---|---|---|---|---|---|---|
| 0 (msb) | 1 | 2 | 3 | 4 | 5 | 6 | 7 (1sb) | # of bytes | |
| ef (801) | extType = 0xC (803) | | | | | | | 1 | Octet N |
| extLen (805) | | | | | | | | 1 | N+1 |
| PortReductionType = 10 (807) | | numPortReduction (809) | | | | | | 1 | N+2 |
| antMask (1st Reduction port) [63:0] (841) | | | | | | | | 8 | N+3 |
| antMask (2nd Reduciton port) [63:0] (843) | | | | | | | | 8 | N+11 |
| ... | | | | | | | | | |
| antMask (numPortReduction PortReduction) [63:0] (845) | | | | | | | | 8 | |
| zero pad to 4-byte boundary | | | | | | | | var | |

FIG. 8C

900

| Extension Type D : EQ in O-RU setup | | | | | | | | | |
|---|---|---|---|---|---|---|---|---|---|
| 0 (msb) | 1 | 2 | 3 | 4 | 5 | 6 | 7 (1sb) | # of bytes | |
| ef (901) | extType = 0xD (903) | | | | | | | 1 | Octet N |
| extLen = 0x01 (1 word) (905) | | | | | | | | 1 | N+1 |
| reserved | | | SINR report on/off (911) | ToE on/off (913) | FoE on/off (915) | NI report on/off (917) | Ant. SINR report on/off (919) | 1 | N+2 |
| reserved | | | | | | | | 1 | N+3 |

FIG. 9A

950

| Section Type 5 : DL/UL IQ data msgs | | | | | | | | | |
|---|---|---|---|---|---|---|---|---|---|
| 0 (msb) | 1 | 2 | 3 | 4 | 5 | 6 | 7 (1sb) | # of bytes | |
| transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolid | | | | | | 1 | Octet 12 |
| numberOfsections | | | | | | | | 1 | Octet 13 |
| sectionType = 5 (953) | | | | | | | | 1 | Octet 14 |
| udCompHdr | | | | | | | | 1 | Octet 15 |
| udClassHdr (955) | | | | | | | | 1 | Octet 16 |
| sectionId | | | | | | | | 1 | Octet 17 |
| sectionId | | | | rb | symInc | startPrbc | | 1 | Octet 18 |
| startPrbc | | | | | | | | 1 | Octet 19 |
| numPrbc | | | | | | | | 1 | Octet 20 |
| reMask[11:4] | | | | | | | | 1 | Octet 21 |
| reMask[3:0] | | | | numSymbol | | | | 1 | Octet 22 |
| ef | | | | | | | | 1 | Octet 23 |
| ueId[7:0] | | | | | | | | 1 | Octet 24 |
| Section Extensions as indicated by "ef" | | | | | | | | var | Octet 25 |
| | | | | | | | | | |

951

955

| 0 (msb) | 1 | 2 | 3 | 4 | 5 | 6 | 7 (1sb) | octets |
|---|---|---|---|---|---|---|---|---|
| reserved | | Class Aenable (960) | SINR report on/off (961) | ToE on/off (963) | FoE on/off (965) | NI report on/off (967) | Ant. SINR report on/off (969) | 1 |

FIG. 9B

1000

| Extension Type E : Frequency offset feedback | | | | | | | | | |
|---|---|---|---|---|---|---|---|---|---|
| 0 (msb) | 1 | 2 | 3 | 4 | 5 | 6 | 7 (1sb) | # of bytes | |
| ef (1001) | extType = 0xE (1003) | | | | | | | 1 | Octet N |
| extLen = 0x01 (1 word) (1005) | | | | | | | | 1 | N+1 |
| Frequency offset feedback (1007) | | | | | | | | 2 | N+2 |

FIG. 10

1100

| DL/UL IQ data msgs | | | | | | | | | |
|---|---|---|---|---|---|---|---|---|---|
| 0 (msb) | 1 | 2 | 3 | 4 | 5 | 6 | 7 (1sb) | # of bytes | |
| transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolid | | | | | | 1 | Octet 12 |
| sectionId | | | | | | | | 1 | Octet 13 |
| sectionId | | | | rb | symInc | startPrbc | | 1 | Octet 14 |
| startPrbc | | | | | | | | 1 | Octet 15 |
| numPrbc | | | | | | | | 1 | Octet 16 |
| udCompHdr (not always present) | | | | | | | | 0/1 | Octet 17 |
| udClassHdr (not always present) | | | | | | | | 0/1 | Octet 18 |
| udCompLen (not always present) | | | | | | | | 0/2 | Octet 17/19 |
| udCompParam (not always present) | | | | | | | | 0/1/2 | Octet 17/19/21 |
| udClassParam(not always present) (1110) | | | | | | | | 0/2/4 | |
| iSampleEqu (1st data RE in thePRB) | | | | | | | | 1* | K= 17/19/20/21/23 |
| qSampleEqu (1st data RE in the PRB) | | | | | | | | 1* | K+1* |
| ... | | | | | | | | | |
| iSampleEqu (Nth data RE in the PRB) | | | | | | | | 1* | |
| qSampleEqu (Nth data RE in the PRB) | | | | | | | | 1* | |
| udCompParam (not always present) | | | | | | | | 1* | |
| udClassParam (not always present) | | | | | | | | 0/4 | |
| iSampleEqu (1st data RE in thePRB) | | | | | | | | 1* | |
| qSampleEqu (1st data RE in the PRB) | | | | | | | | 1* | |
| ... | | | | | | | | 1* | |
| iSampleEqu (Nth data RE in the PRB) | | | | | | | | 1* | |
| qSampleEqu (Nth data RE in the PRB) | | | | | | | | 1* | |

1120

1110

| 0 (msb) | 1 | 2 | 3 | 4 | 5 | 6 | 7 (1sb) | octets |
|---|---|---|---|---|---|---|---|---|
| estimatedSINR (in the RB) (1111) | | | | | | | | 2 |
| NoiseandInterferencePower (in the RB) (1113) | | | | | | | | 2 |

FIG. 11A

1150

| section Type F : Additional Report (feedback form ET_Report) | | | | | | | | | |
|---|---|---|---|---|---|---|---|---|---|
| 0 (msb) | 1 | 2 | 3 | 4 | 5 | 6 | 7 (1sb) | # of bytes | |
| transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolid | | | | | | 1 | Octet 12 |
| numberOfsections | | | | | | | | 1 | Octet 13 |
| sectionType = 0x0F | | | | | | | | 1 | Octet 14 |
| numberOfUEs | | | | | | | | 1 | Octet 15 |
| reserved | | | | | | | | 1 | Octet 16 |
| reserved | ueId[14:8] | | | | | | | 1 | Octet 17 |
| ueId[7:0] | | | | | | | | 1 | Octet 18 |
| reserved 1160 | | | SINR (1161) | ToE reporting (1163) | FoE reporting (1165) | Ant. SINR reporting (1167) | NI reporting (1169) | 1 | Octet 19 |
| reserved | | | | rb | symInc | startPrbc | | 1 | Octet 20 |
| startPrbc | | | | | | | | 1 | Octet 21 |
| numPrbc | | | | | | | | 1 | Octet 22 |
| estimatedSINR (first PRB) | | | | | | | | 2 | Octet 23 |
| ... 1171 | | | | | | | | 2 | Octet 25 |
| estimatedSINR (last PRB) | | | | | | | | 2 | |
| UEtimingEstimation (1173) | | | | | | | | 2 | |
| frequencyOffsetEstimation (1175) | | | | | | | | 2 | |
| EstimatedantennaportSINR (first antenna) | | | | | | | | 2 | |
| ... 1177 | | | | | | | | | |
| EstimatedantennaportSINR (last antenna) | | | | | | | | 2 | |
| NoiseandInterferencePower (first PRB) | | | | | | | | 2 | |
| ... 1179 | | | | | | | | | |
| NoiseandInterferencePower (last PRB) | | | | | | | | 2 | |

FIG. 11B

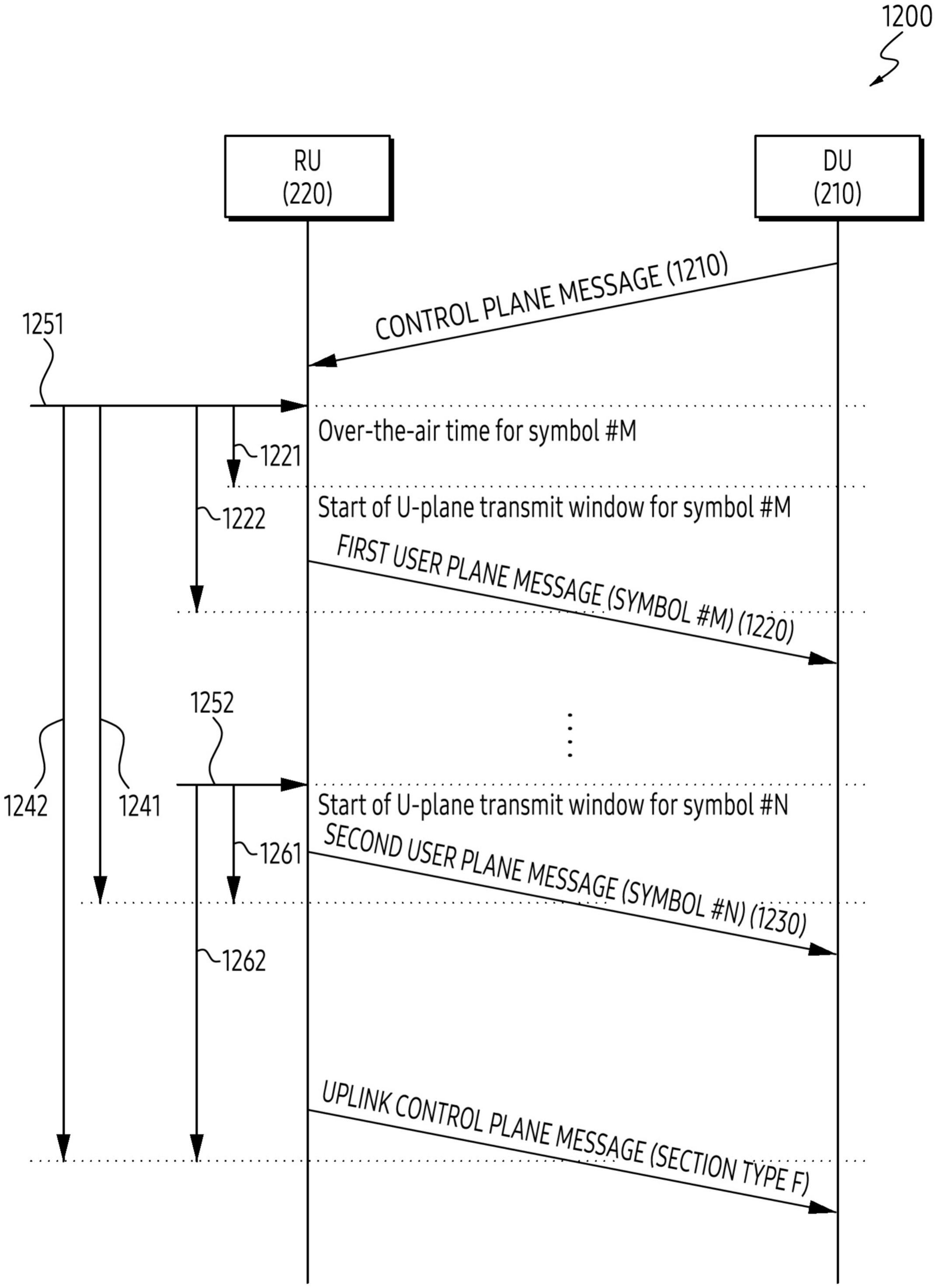
1200
RU
(220)
DU
(210)
CONTROL PLANE MESSAGE (1210)
1251
Over-the-air time for symbol #M
1221
Start of U-plane transmit window for symbol #M
1222
FIRST USER PLANE MESSAGE (SYMBOL #M) (1220)
1252
1242
1241
Start of U-plane transmit window for symbol #N
1261
SECOND USER PLANE MESSAGE (SYMBOL #N) (1230)
1262
UPLINK CONTROL PLANE MESSAGE (SECTION TYPE F)

FIG. 12

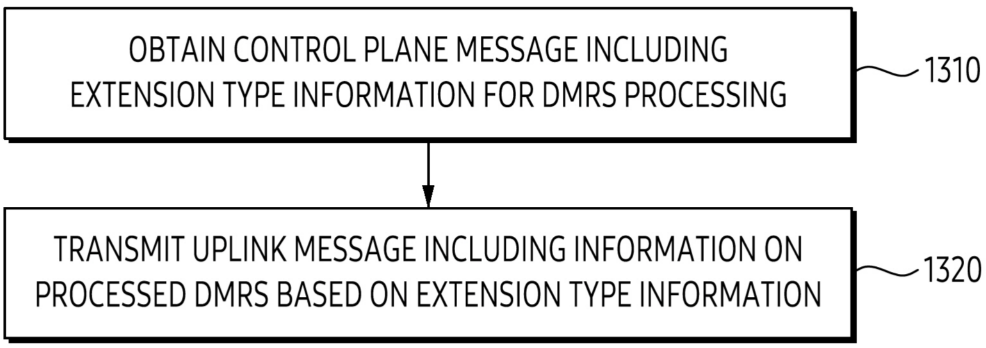
OBTAIN CONTROL PLANE MESSAGE INCLUDING EXTENSION TYPE INFORMATION FOR DMRS PROCESSING
1310
TRANSMIT UPLINK MESSAGE INCLUDING INFORMATION ON PROCESSED DMRS BASED ON EXTENSION TYPE INFORMATION
1320

FIG. 13

## INTERNATIONAL SEARCH REPORT

International application No.
**PCT/KR2024/004352**

**A. CLASSIFICATION OF SUBJECT MATTER**

**H04L 69/324**(2022.01)i; **H04W 92/04**(2009.01)i; **H04W 88/08**(2009.01)i; **H04L 69/323**(2022.01)i; **H04L 69/00**(2022.01)i

According to International Patent Classification (IPC) or to both national classification and IPC

**B. FIELDS SEARCHED**

Minimum documentation searched (classification system followed by classification symbols)

H04L 69/324(2022.01); H04B 7/0452(2017.01); H04B 7/0456(2017.01); H04B 7/06(2006.01); H04B 7/08(2006.01); H04L 25/03(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프론트홀(fronthaul), DU(distributed unit), RU(radio unit), 분리(split), DMRS(demodulation reference signal), 확장 타입(extension type)

**C. DOCUMENTS CONSIDERED TO BE RELEVANT**

| Category* | Citation of document, with indication, where appropriate, of the relevant passages | Relevant to claim No. |
|---|---|---|
| Y | EP 4152639 A1 (MAVENIR SYSTEMS, INC.) 22 March 2023 (2023-03-22) See paragraphs [0031], [0035], [0038], [0043], [0076]-[0078], [0082]-[0083], [0097], [0101], [0103], [0105] and [0108]; claims 1-2 and 18; and table 4. | 1-15 |
| Y | KR 10-2022-0037305 A (SAMSUNG ELECTRONICS CO., LTD.) 24 March 2022 (2022-03-24) See paragraphs [0228], [0230], [0240] and [0245]; and claims 1-2. | 1-15 |
| Y | WO 2022-254160 A1 (ORANGE) 08 December 2022 (2022-12-08) See page 3, lines 8-30 and page 12, lines 25-30. | 6,9-10 |
| Y | US 2021-0126760 A1 (ELECTRONICS AND TELECOMMUNICATIONS RESEARCH INSTITUTE) 29 April 2021 (2021-04-29) See paragraphs [0065], [0069]-[0070], [0076], [0079], [0089]-[0093], [0110] and [0175]. | 6-10 |
| A | US 2022-0021423 A1 (MAVENIR NETWORKS, INC.) 20 January 2022 (2022-01-20) See claims 1-20. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 July 2024** | **31 July 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/004352**

| Patent document cited in search report | Publication date (day/month/year) | Patent family member(s) | Publication date (day/month/year) |
|---|---|---|---|
| EP 4152639 A1 | 22 March 2023 | US 2023-0155864 A1 | 18 May 2023 |
| KR 10-2022-0037305 A | 24 March 2022 | CN 116158166 A | 23 May 2023 |
| | | EP 4203588 A1 | 28 June 2023 |
| | | JP 2023-542177 A | 05 October 2023 |
| | | US 2023-0224118 A1 | 13 July 2023 |
| | | WO 2022-060180 A1 | 24 March 2022 |
| WO 2022-254160 A1 | 08 December 2022 | EP 4348873 A1 | 10 April 2024 |
| | | FR 3123773 A1 | 09 December 2022 |
| US 2021-0126760 A1 | 29 April 2021 | US 11546124 B2 | 03 January 2023 |
| | | US 2023-0086667 A1 | 23 March 2023 |
| US 2022-0021423 A1 | 20 January 2022 | EP 3955470 A2 | 16 February 2022 |
| | | EP 3955470 A3 | 04 May 2022 |
| | | EP 3955470 B1 | 01 May 2024 |

Form PCT/ISA/210 (patent family annex) (July 2022)